# EUROPEAN PATENT SPECIFICATION

(11) **EP 1 734 432 B1**
(45) Date of publication and mention of the grant of the patent: **21.09.2011**
(21) Application number: 05720243.4
(22) Date of filing: 08.03.2005
(51) Int. Cl.: G05B 23/02, G06F 11/22

(54) **DISPLAY APPARATUS, PROGRAM FOR CAUSING A COMPUTER TO FUNCTION AS THE DISPLAY APPARATUS AND STORAGE MEDIUM INCLUDING THE PROGRAM**
ANZEIGEVORRICHTUNG, PROGRAMM ZUM EINSATZ EINES COMPUTERS ALS EINE SOLCHE ANZEIGEVORRICHTUNG, UND SPEICHERMEDIUM MIT DEM PROGRAMM
APPAREIL D'AFFICHAGE, PROGRAMME POUR FAIRE FONCTIONNER UN ORDINATEUR COMME UN TEL APPAREIL D'AFFICHAGE, ET SUPPORT D'ENREGISTREMENT DANS LEQUEL EST MEMORISE LE PROGRAMME

(30) Priority: 22.03.2004 JP 2004082747
(43) Date of publication of application: 20.12.2006
(73) Proprietor: Digital Electronics Corporation, Osaka-shi Osaka 559-0031 (JP)
(72) Inventor: Saito, Masao,, Osaka-shi, Osaka 559-0031 (JP)
(74) Representative: Hoffmann, Jörg Peter
(86) International application number: PCT/JP2005/003971
(87) International publication number: WO 2005/091098

(56) References cited:
- JP-A- 10 143 237
- JP-A- 2001 067 122
- JP-A- 2003 022 108
- JP-A- 2003 316 404

## Description

### Technical Field

The present invention relates to a display apparatus having a function of displaying a state of control target equipment. More particularly, the present invention relates to a display apparatus having a function of storing a signal indicative of a state of control target equipment electrically connected thereto and a video signal of the equipment in association with each other and a function of reproducing moving images corresponding to the state based on a reproduction instruction, a program product for causing a computer to function as the display apparatus, and a recording medium storing the program product.

### Background Art

Recently, programmable display apparatuses have been used as interfaces with devices. In addition to the function as a display unit, some programmable display apparatuses include a function as a unit that controls a device as control target equipment, that is, the function as a so-called programmable logic controller (abbreviated as PLC hereinafter).

A display apparatus having a PLC function stores a control program created beforehand and controls a device based on an instruction according to the program. On the other hand, this display apparatus obtains a signal from the device, detects a state of the device based on the signal, and then displays an image representing the device in a color or shape associated with the state. In addition, when the operator touches a display portion of the image on a touch panel screen to instruct the display apparatus to control the device, the display apparatus outputs a control signal to the device based on that instruction and exerts control according to the instruction. Here, a device is referred to as control target equipment electrically connected to the display apparatus and being capable of receiving/transmitting a signal from/to the display apparatus.

A display apparatus having those functions is disclosed, for example, in Japanese Patent Laying-Open No. 10-238020 (Patent Document 1), Japanese Patent Laying-Open No. 2000-20113 (Patent Document 2), Japanese Patent Laying-Open No. 2003-84811 (Patent Document 3), Japanese Patent Laying-Open No. 2003-131710 (Patent Document 4), Japanese Patent Laying-Open No. 2003-157105 (Patent Document 5), or Japanese Patent Laying-Open No. 2004-5060 (Patent Document 6).

Such a display apparatus allows control of a device and display of a state of the device. Here, as for the monitoring of the device, it is requested that the device developing a trouble should be analyzed.

Then, for example, Japanese Patent Laying-Open No. 2000-250775 (Patent Document 7) discloses a trouble analysis support apparatus capable of easily and reliably analyzing a trouble of a sequence control facility. The trouble analysis support apparatus includes a control information recording unit recording input/output information of the sequence control facility controlling a device, a simulation unit simulating the sequence control apparatus controlling the device based on the recorded information, and an output unit outputting an internal state of the simulation unit.

According to the aforementioned trouble analysis support apparatus, the situations previous to and subsequent to the trouble of the device can be observed simultaneously and in synchronization, as input/output information and PLC control information. Furthermore, the PLC control information can be recognized, for example, in a ladder language, so that whether or not a logic circuit is established can easily be determined. In addition, the unrecorded relay state in PLC can also be observed, so that a trouble analysis of a device can easily be conducted.
Patent Document 1: Japanese Patent Laying-Open No. 10-238020
Patent Document 2: Japanese Patent Laying-Open No. 2000-20113
Patent Document 3: Japanese Patent Laying-Open No. 2003-84811
Patent Document 4: Japanese Patent Laying-Open No. 2003-131710
Patent Document 5: Japanese Patent Laying-Open No. 2003-157105
Patent Document 6: Japanese Patent Laying-Open No. 2004-5060
Patent Document 7: Japanese Patent Laying-Open No. 2000-250775

### Disclosure of the Invention

### Problems to be Solved by the Invention

In accordance with the trouble analysis support apparatus disclosed in Japanese Patent Laying-Open No. 2000-250775, however, the trouble of the facility is analyzed only by simulation. Therefore, for example, when a trouble cannot be reproduced accurately, a precise analysis result cannot be obtained. Moreover, since it is difficult to predict the time when a trouble occurs, advance feedback of a simulation result to the device may sometimes not be proper. In addition, since this apparatus is not intended to be used during the operation of the device, the operator of the apparatus cannot cope with the trouble that occurs during the operation.

The present invention is made to solve the aforementioned problems. An object of the present invention is to provide a display apparatus capable of giving notification of a change in state of a device in real time and also supporting measures including analysis of the cause of the change.

Another object of the present invention is to provide a program product for causing a computer to function as a display apparatus capable of giving notification of a change in state of a device and also supporting measures including analysis of the cause of the change.

A further object of the present invention is to provide a recording medium storing a program product for causing a computer to function as a display apparatus capable of giving notification of a change in state of a device and also supporting measures including analysis of the cause of the change.

### Means for Solving the Problems

In order to solve the aforementioned problems, in accordance with an aspect of the present invention, a display apparatus includes: storage means for storing a control program having a plurality of instructions and symbol data for displaying a symbol related to each of the plurality of instructions; control means for controlling control target equipment electrically connected to the display apparatus by executing each of the plurality of instructions; display means for displaying an image; first display control means, based on the symbol data corresponding to the instruction executed by the control means, for causing the symbol corresponding to the executed instruction to be displayed in a first display region in the display means; video signal input means for receiving an input of video data generated based on a picked-up image of the control target equipment; video data storing means for storing the video data; relation means for relating the symbol data corresponding to the instruction executed by the control means to the video data stored in the video data storing means; detection means for detecting designation of the symbol displayed in the first display region; and second display control means, responsive to detection of the designation, for causing a moving image to be displayed in a second display region in the display means based on the video data related to the symbol data corresponding to the symbol displayed in the first display region.

Preferably, the display apparatus further includes timer means for measuring a time. The relation means relates the symbol data corresponding to the symbol displayed in the first display region to the video data input through the video signal input means based on the time measured by the timer means.

Preferably, the display apparatus further includes: state signal input means for receiving an input of a state signal indicating a state of the control target equipment; log generation means for generating log information representing a history of operations of the control target equipment based on the time and the state signal; and log storing means for storing the log information. The relation means relates the symbol data corresponding to the symbol displayed in the first display region to the log information.

Preferably, the state signal input means receives an input of a signal indicating an abnormality in the control target equipment. The log generation means generates log information indicating an abnormality in the control target equipment when the signal indicating an abnormality is input. The relation means relates a time at which the log information indicating an abnormality is generated to the log information indicating an abnormality for storage in the log storing means. The first display control means causes the symbol to be displayed in the first display region by making a difference between an output form of the symbol data for displaying the symbol corresponding the log information indicating an abnormality and an output form of the symbol data for displaying the symbol corresponding to a normal state in the control target equipment, so that a first display manner in the display means of the symbol corresponding to the log information indicating an abnormality differs from a second display manner in the display means of the symbol corresponding to the normal state.

Preferably, the detection means detects designation of the symbol displayed in the first display manner. The display apparatus further includes: reading means for reading time corresponding to the log information indicating an abnormality from the log storing means based on detection of the designation; and reproduction means for reading video data corresponding to a predetermined period of time from the read time. The second display control means causes a moving image to be displayed in the second display region based on the video data read by the reproduction means.

Preferably, the detection means detects designation of the symbol displayed in the first display manner. The display apparatus further includes: reading means for reading time corresponding to the log information indicating an abnormality from the log storing means based on detection of the designation; and reproduction means for reading video data corresponding to a period of time from a predetermined time previous to the time to a predetermined time subsequent to the time. The second display control means causes a moving image to be displayed in the second display region based on the video data read by the reproduction means.

Preferably, the first display control means controls the display means such that a plurality of symbols are displayed in the first display region in the first display manner. The detection means detects designation of any symbol among the plurality of symbols. The second display control means includes time data reading means for reading each time corresponding to each of the plurality of symbols from the log storing means, video data reading means for reading video data corresponding to a predetermined period of time from each read time for each of the plurality of symbols from the log storing means, and reproduction control means for causing a moving image to be displayed in the second display region in time order or backward in time from the time corresponding to any symbol of which designation is detected based on the read video data.

Preferably, the display means displays the first display region and the second display region in a same screen.

Preferably, the video signal input means receives an input of each video data generated based on an image of the control target equipment picked up by each of a plurality of image picking-up means. The relation means relates each symbol data corresponding to each of a plurality of instructions executed by the control means to each video data. The second display control means causes each moving image to be displayed in the second display region based on each video data.

In accordance with another aspect of the present invention, a program product causes a computer to function as a display apparatus. The program product causes the computer to execute the steps of: reading a control program having a plurality of instructions and symbol data for displaying a symbol related to each of the plurality of instructions from storage means for storing data; controlling control target equipment electrically connected to the computer by executing each of the plurality of instructions; based on the symbol data corresponding to the instruction executed at the controlling step, causing the symbol corresponding to the executed instruction to be displayed in a first display region in display means for displaying an image; receiving an input of video data generated based on a picked-up image of the control target equipment; storing the video data in the storage means; relating the symbol data corresponding to the executed instruction to the stored video data; detecting designation of the symbol displayed in the first display means; and in response to detection of the designation, causing a moving image to be displayed in a second display region in the display means based on the video data related to the symbol data corresponding to the symbol displayed in the first display region.

In accordance with a further aspect of the present invention, a recording medium stores a program product causing a computer to function as a display apparatus.

### Effects of the Invention

In the display apparatus in accordance with the present invention, a signal indicating a state of control target equipment and video of the equipment are stored in relation with each other. The signal is related with a symbol indicating an instruction included in a program controlling the control target equipment. When the symbol is selected, a moving image related with the symbol is displayed. In this manner, the operator of the display apparatus can observe the state of the control target equipment, for example, an abnormal state, together with the video at that time. Therefore, any necessary measures including the analysis of the control target equipment can easily be taken.

In the display apparatus in accordance with the present invention, the obtained video signal is accumulated within the range of data storage capacity. Therefore, even when the operator is not present in front of the display apparatus in the abnormal state of the control target equipment, the operator designates the symbol displayed in the display apparatus to cause the display apparatus to display the past moving image to observe the abnormality.

When the program product in accordance with the present invention is executed by a computer, the computer can function as the display apparatus as described above.

In the recording medium in accordance with the present invention, a computer can function as a display apparatus having a function of storing a signal indicating a state of control target equipment and the moving image of the equipment in relation with each other.

### Brief Description of the Drawings

Fig. 1 is a block diagram illustrating a functional configuration of a display apparatus 100 in accordance with an embodiment of the present invention.
Fig. 2 is a diagram illustrating a manner of storing data in a variable memory 168 of display apparatus 100.
Fig. 3 is a diagram illustrating a manner of storing programs in a control program memory 170 of display apparatus 100.
Fig. 4 is a diagram illustrating a manner of storing data in a ladder log storing unit 166 of display apparatus 100.
Fig. 5 is a diagram illustrating a manner of storing data in a video data storing unit 164 of display apparatus 100.
Fig. 6 is a flowchart (1) illustrating a procedure of processes performed by a control unit 130 of display apparatus 100.
Fig. 7 is a flowchart (2) illustrating a procedure of processes performed by control unit 130 of display apparatus 100.
Fig. 8 is a flowchart (3) illustrating a procedure of processes performed by control unit 130 of display apparatus 100.
Fig. 9 is a view (1) illustrating a screen in which a ladder diagram is displayed in a display 152 of display apparatus 100.
Fig. 10 is a view (2) illustrating a screen in which a ladder diagram is displayed in display 152 of display apparatus 100.
Fig. 11 is a view (3) illustrating a screen in which a ladder diagram is displayed in display 152 of display apparatus 100.
Fig. 12 is a diagram illustrating a data structure in a storage unit 160 of display apparatus 100 in accordance with a first modification to the embodiment of the present invention.
Fig. 13 is a view (1) illustrating a screen appearing on display 152 of display apparatus 100 in accordance with a second modification to the embodiment of the present invention.
Fig. 14 is a view (2) illustrating a screen appearing on display 152 of display apparatus 100 in accordance with the second modification to the embodiment of the present invention.
Fig. 15 is a view (3) illustrating a screen appearing on display 152 of display apparatus 100 in accordance with the second modification to the embodiment of the present invention.
Fig. 16 is a view (4) illustrating a screen appearing on display 152 of display apparatus 100 in accordance with the second modification to the embodiment of the present invention.
Fig. 17 is a block diagram illustrating a hardware configuration of a computer system realizing display apparatus 100.

### Description of the Reference Signs

100 display apparatus, 110 input unit, 112 video signal input unit, 114 audio signal input unit, 116 touch panel, 130 control unit, 132 display control unit, 134 clock, 136 video data generating unit, 138 ladder log data generating unit, 140 HMI processing unit, 142 control HMI processing unit, 144 device control unit, 150 display unit, 152 display, 154 input/output interface unit, 160 storage unit, 162 screen data storing unit, 164 video data storing unit, 166 ladder log storing unit, 168 variable memory, 170 control program memory, 180, 181 device, 182 microphone, 184 camera, 186 target system, 190 PLC, 930-944 button, 1700 computer system, 1710 CPU, 1720 monitor, 1730 mouse, 1740 keyboard, 1750 memory, 1760 fixed disk, 1770 FD drive, 1772 FD, 1780 CD-ROM drive, 1782 CD-ROM.

### Best Modes for Carrying Out the Invention

In the following, an embodiment of the present invention will be described with reference to the figures. In the following description, the same parts will be denoted with the same reference characters. Their designations and functions are also the same. Therefore, the detailed description thereof will not be repeated.

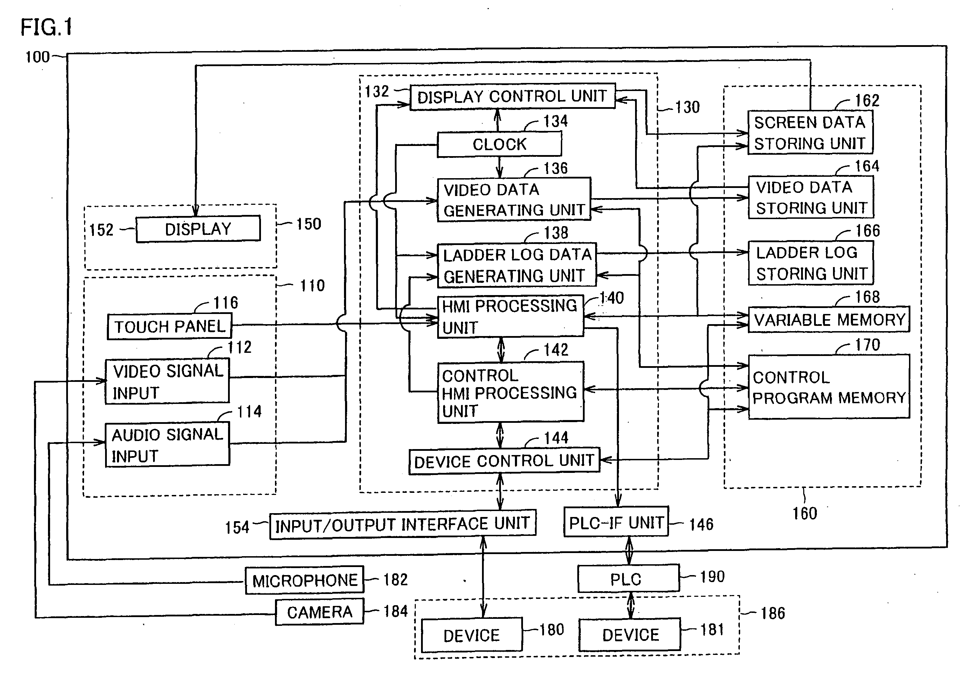

Referring to Fig. 1, a display apparatus 100 in accordance with an embodiment of the present invention will be described. Fig. 1 is a block diagram illustrating a functional configuration of display apparatus 100.

Display device 100 includes an input unit 110 for outputting a prescribed instruction signal based on an external input, a storage unit 160 for storing data and a program, a control unit 130 for performing a predetermined process based on the data output from input unit 110 and the data and program stored in storage unit 160, a PLC-IF (Programmable Logic Controller-Interface) unit 146 for interfacing with a PLC 190, a display unit 150 for displaying an image, and an input/output interface unit 154 for interfacing data communications with a device 180 connected to display apparatus 100. The communicated data includes an instruction to device 180, data representing the normal or abnormal state of device 180, temperature and any other process conditions, volumes and any other track record data in device 180, and the like.

Display device 100 is connected to device 180, a microphone 182, a camera 184, and PLC 190. PLC 190 is connected to device 181. Display device 100 and PLC 190 are connected to each other, for example, through a serial cable. Display device 100 in accordance with the present embodiment also has functions as PLC. Therefore, as shown in Fig. 1, display apparatus 100 can electrically be connected not only to PLC 190 but also to device 180 controlled by itself. Accordingly, devices 180, 181 may constitute a target system 186 representing a target to be controlled by display apparatus 100.

Devices 180, 181 are, for example, input equipment such as a sensor (temperature sensor, optical sensor) or switch (push button switch, limit switch, pressure switch, and the like), output equipment such as an actuator, relay, or a solenoid valve, mechanical parts processing facility, or a food production facility or any other production facility. However, the present invention is not limited thereto. In other words, device 180 may be actual device 180 or may represent a region of a storage device included in a system configured with display apparatus 100, such as a storage device included in display apparatus 100, PLC 190, or any other device, as long as its state can be obtained and it can be modified or controlled. In the present embodiment, as described later, display apparatus 100 displays a state of control over devices 180, 181 and a state of each operation.

Input unit 110 includes a video signal input unit 112 for externally receiving an input of a video signal, an audio signal input unit 114 for receiving an input of an audio signal, and a touch panel 116 for detecting a press by the operator to output a prescribed signal. Touch panel 116 is provided to enter an input on a display screen in a display 152 described later and is formed, for example, of an analog resistance film-type touch panel.

Display unit 150 is, for example, display 152. Display 152 is formed, for example, of CRT (Cathode Ray Tube), a liquid crystal display, or the like. Since touch panel 116 is arranged on the display screen of display 152, display apparatus 100 presents an image on display 152 according to an input through touch panel 116.

Sound obtained by microphone 182 is converted into an audio signal and input to audio signal input unit 114. Microphone 182 is installed in the vicinity of device 180 such that, for example, a sound emitted from device 180 can be obtained. Alternatively, microphone 182 may be contained in device 180.

A signal of a video shot by camera 184 is input to video signal input unit 112. The signal is, for example, an analog signal, or may be a digital signal. Camera 184 is placed at a position where the image of the operational state of device 180 can be picked up. Alternatively, when the operation of which image is required is performed inside device 180, camera 184 may be placed inside thereof. It is noted that display apparatus 100 may include one camera 184 or may include a plurality of cameras.

Storage unit 160 includes a screen data storing unit 162 storing screen data, a video data storing unit 164 storing data generated by a video data generating unit 136, a ladder log storing unit 166 storing data generated by a ladder log data generating unit 138, a variable memory 168 storing data for display apparatus 100 to control device 180, and a control program memory 170 storing a program to be executed for control unit 130 to control device 180. Screen data storing unit 162 is realized, for example, by FEPROM (Flash Erasable and Programmable Read-Only Memory), VRAM (Video Random Access Memory), or the like. Video data storing unit 164 and ladder log storing unit 166 are realized, for example, by a nonvolatile storage device such as a hard disk. Variable memory 168 and control program memory 170 are realized, for example, by RAM. It is noted that the configuration of storage unit 160 is not limited to the form shown in Fig. 1 and may be in any other form. For example, video data storing unit 164 and ladder log storing unit 166 may be realized by the same storage device.

The screen data stored in screen data storing unit 162 includes a tag indicating the correspondence between a region on the screen and a device corresponding to display or input in the region. In the present embodiment, HMI processing unit 140 can switch a plurality of unit screens for display. The tag includes a file number indicating a unit screen having the tag being valid, the designation of an event for specifying the content of an operation to be performed on the unit screen, and reference information referred to for each event.

For example, if the tag is a display tag for displaying part graphics depending on the state of devices 180, 181 in a prescribed screen region of display unit 150, the reference information includes a display coordinate range, a variable (described later) with which the device can be specified, image data for displaying the graphics, and a file number referred to during display. If the tag is an input tag, the reference information includes data for representing a region receiving an input as coordinates and a variable of a device into which an input result is written.

Video data storing unit 164 is, for example, a memory device having a ring buffer function. In other words, video data is continuously recorded in prescribed data storing regions, and is recorded again from the top region once the last region is used. Therefore, any unnecessary video data is successively overwritten by new video data, so that an increase in storage capacity can be prevented. Alternatively, if display apparatus 100 includes a plurality of cameras, video data from each camera is stored in regions divided beforehand.

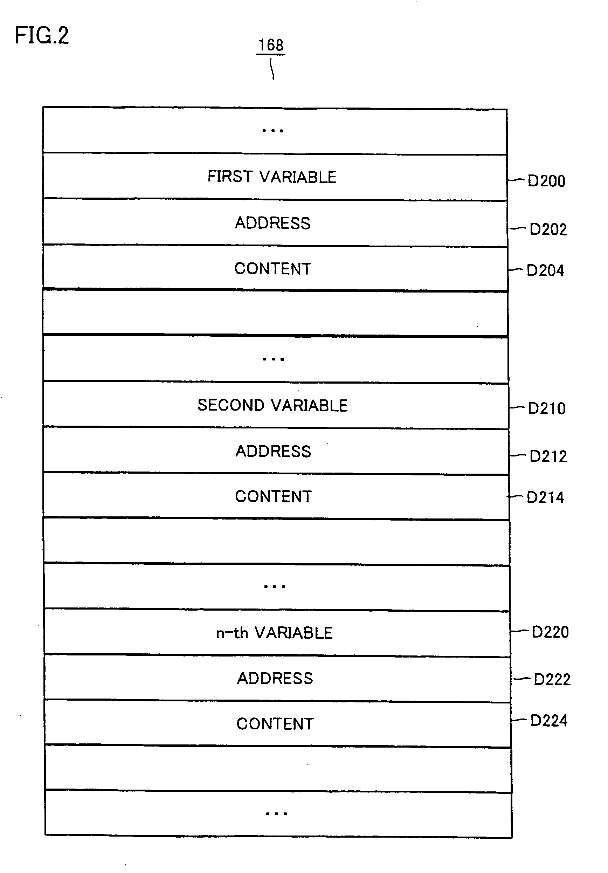

Variable memory 168 stores, for each variable, a combination of the designation of a variable (variable name), information for specifying device 180 or internal memory corresponding to the variable (for example, address), and the content of the variable, as described later (Fig. 2).

Referring again to Fig. 1, the configuration of control unit 130 will be described. Control unit 130 includes a display control unit 132 for controlling the display of an image in display unit 150, a clock 134 for measuring the time, a video data generating unit 136 for generating digital video data having a prescribed data structure based on the input video signal and time information, a ladder log data generating unit 138 for generating control information of an external device input through input/output interface 154, an HMI (Human Machine Interface) processing unit 140 for performing a prescribed interface process based on data output from touch panel 116, a control HMI processing unit 142 for controlling HMI processing unit 140 and device control unit 154, and a device control unit 144 for controlling device 180 electrically connected to display apparatus 100. Control unit 130 may be realized by a circuit for executing each process as described above or may be realized by CPU (Central Processing Unit), MPU (Micro Processor Unit) or any other processor usually included in a computer system.

Clock 134 measures the time in display apparatus 100 and outputs time data. This data is used for display control unit 132, video data generating unit 136, ladder log data generating unit 138, HMI processing unit 140, and the like.

Video data generating unit 136 generates video data for recording based on a video signal from video signal input unit 112, an audio signal from audio signal input unit 114, and time data from clock 134 to store the same in video data storing unit 164. The video of device 180 and the time are thereby related with each other.

Ladder log data generating unit 138 generates log information representing an operational state of device 180 based on time data from clock 134, data from control program memory 170, and data from control HMI processing unit 142. Therefore, the log information is the one in which at least video data, time data, and an instruction to device 180 are related with each other.

Display control unit 132 realizes display by writing data for causing display 152 to present an image into screen data storing unit 162 (for example VRAM). In other words, when display control unit 132 writes display data in that region of the data region in screen data storing unit 162 that corresponds to a display region in display 152, display 152 presents a screen on display 152 based on the written data. When display control unit 132 stores display data in each of two data regions in screen data storing unit 162, display 152 presents two display regions.

For example, when display control unit 132 writes data for displaying a motion image and data for displaying a still image in the respective regions of screen data storing unit 162, display 152 presents the motion image and the still image, respectively. The number of regions displayed in display 152 in this manner is not particularly limited. The regions may be displayed in a sequence as if they constitute one display screen. Three or more regions may be displayed. Alternatively, the regions may be displayed such as to overlap with each other or may be separately displayed. In addition, during display in display 152, the displayed position may be changed or the position of a layer of the overlapping display may be changed according to the operation of a mouse or other pointing devices (not shown).

Furthermore, display control unit 132 outputs data for displaying an image corresponding to device 180 with its output form switched based on the result of the processing by control HMI processing unit 142 described later. For example, when a signal indicating that device 180 is normal is input from device 180 to device control unit 144, display control unit 132 generates data for displaying an image in green in response to the signal and continuously outputs the data to screen data storing unit 162. In this case, display 152 continues to display a green image (for example, an icon corresponding to the contents of control).

On the other hand, when a signal indicating the abnormality of device 180 is input from device 180 to device control unit 144, display control unit 132 generates data for displaying an image in red in response to the signal. For example, the image is provided with an attribute indicating display in red, of the attributes for displaying images. In addition, display control unit 132 intermittently outputs the data to screen data storing unit 162. As a result, display 152 starts to display the image in red, which has been displayed in green.

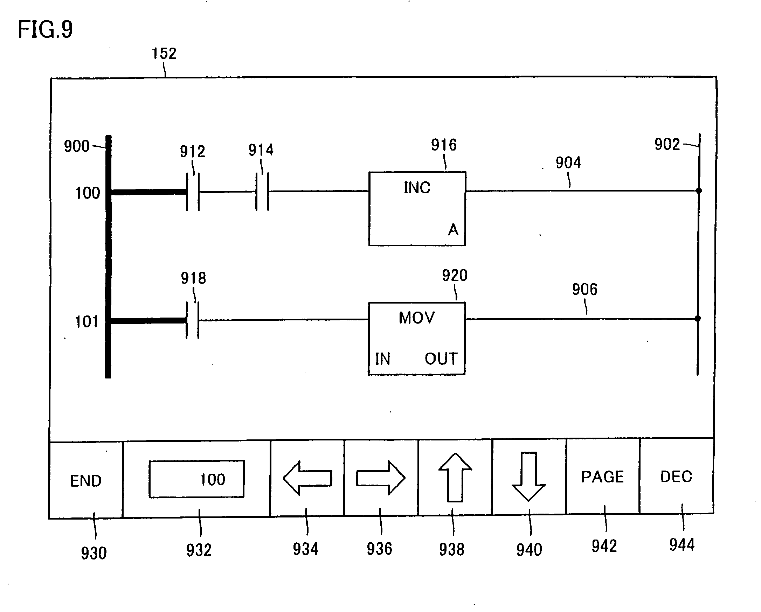

Alternatively, display control unit 132 alternately outputs the above-noted data and data for canceling the display of the image to screen data storing unit 162. In this case, the red image appears as flashing in display 152. The display form in display 152 will be described later (Fig. 9 to Fig. 11).

HMI processing unit 140 controls display of a screen in display 152 according to an input through touch panel 116, a mouse (not shown), keyboard, or any other input device. For example, when the operator of display apparatus 100 performs an operation of designating a symbol included in a ladder diagram appearing on display 152 on touch panel 116, HMI processing unit 140 detects that designation. HMI processing unit 140 instructs display control unit 132 to read data corresponding to the designated symbol from video data storing unit 164. In response to the instruction, display control unit 132 reads and stores video data corresponding to the image into screen data storing unit 162. As a result, display 152 displays moving images corresponding to the selected image.

HMI processing unit 140 extracts, at predetermined time intervals, a display tag of a base screen (a screen serving as a display base in display 152) that is presently displayed, from the screen data stored in screen data storing unit 162. HMI processing unit 140 refers to variable memory 168 to read the content of the variable corresponding to the tag and display an image corresponding to the content in display 152. The image is, for example, graphics (a so-called symbol) of a part (a switch or the like) included in the ladder. Here, if the above-noted variable corresponds to device 181 controlled by PLC 190 connected to PLC-IF unit 146, HMI processing unit 140 obtains data representing the state of device 181 by communicating with PLC 190 through PLC-IF unit 146 and updates the content of the variable according to the data. When the updated data is stored in screen data storing unit 162, display 152 displays the state of device 181.

Furthermore, in response to an input such as a press on touch panel 116 by the operator, HMI processing unit 140 retrieves an input tag corresponding to the screen presently displayed (the so-called base screen) and corresponding to the input from the screen data and updates the content of the variable corresponding to the tag according to the input result. When display apparatus 100 is connected to another display apparatus having a similar function via a network, HMI processing unit 140 communicates with another display apparatus to control the operation of device 180 according to the content of the variable.

It is noted that in the present embodiment, irrespective of the model of device 180 corresponding to the variable, the representation system at the time of storing the content of the variable (for example, word lengths, codes, or BCD (Binary Coded Decimal) and the like) is standardized in a predetermined representation system. When the variable corresponds to existing devices 180, 181, the representation system in the actual model is also stored in variable memory 168. In this case, when HMI processing unit 140 obtains or controls the state of device 181 through PLC-IF unit 146, the format of the representation system is converted, so that the representation system at the time of storage into variable memory 170 is standardized.

When a ladder diagram is displayed as a ladder monitor screen, control HMI processing unit 142 instructs HMI processing unit 140 to additionally display an image of a button receiving an input of operating the ladder monitor screen, as described later (Fig. 9 to Fig. 11). The instruction received by the button includes, for example, an instruction to terminate the ladder monitor, an instruction of a network number (rung number), an instruction to move (scroll) a region displayed in the ladder monitor screen, an instruction of a unit of move, and the like.

Device control unit 144 reads the state of device 180 at predetermined time intervals of scanning, for example, every a few tens of milliseconds and stores the content of the variable corresponding to device 180 into a prescribed region of variable memory 168.

Furthermore, device control unit 144 successively executes each instruction included in the control program stored in control program memory 170 with reference to the content of each variable stored in variable memory 168. Here, in each instruction, the control target of each instruction word can be specified by a variable as a ladder program. In response to execution of each instruction, the content of each variable is updated. In addition, when the end instruction is executed, upon completion of execution of the control program, device control unit 144 writes in each device 180 the content of the variable corresponding to device 180 connected to input/output interface unit 154, of the variables stored in variable memory 168. Accordingly, device control unit 144 can control each device 180 according to the control program created by the operator in a manner similar to the so-called PLC.

Furthermore, as described above, since the representation system at the time of storing the content of the variable is standardized, device control unit 144 standardizes the representation system at the time of storage by converting the format of the representation system when it communicates with device 180 through input/output interface unit 154.

It is noted that although display apparatus 100 in accordance with the present embodiment includes a function of controlling device 180 and a function of displaying the state, the present invention is not limited to this manner. In other words, display apparatus 100 may at least one of a function of controlling device 180 and a function of displaying the state of device 180.

Referring to Fig. 2, the data structure in display apparatus 100 in accordance with the present embodiment will be described. Fig. 2 is a diagram schematically illustrating a manner of storing data in variable memory 168 of display apparatus 100.

As shown in Fig. 2, data for displaying a first variable is stored in a data region D200. When this data is read, display 152 presents an image related to the first variable as an image represented by that data. For example, when the first variable corresponds to a switch in the ladder diagram, the image of the switch is displayed. The address for specifying the device, internal memory, or the like corresponding the first variable is stored in a data region D202. The content data representing an event in the first variable is stored in a data region D204 according to a predetermined data type. This content data includes data representing the state corresponding to the first variable. For example, if the data type of the first variable is a bit type, 0 (for example, on) or 1 (for example, off) is stored. If the data type is an integer type, for example, 8-bit data is stored.

Similarly, the data concerning a second variable is stored in data regions D210 to D214. In addition, the data for the n-th variable is stored in data regions D220 to D224. It is noted that the data structure in variable memory 168 is not limited to the manner shown in Fig. 2. Such data is generated at the same time when a program for controlling device 180 is created.

Although in the present embodiment, the variables are stored, for example, in numerical order of variables, the data related with the variables may be stored according to a rule other than numerical order. For example, the variables may be hierarchically grouped. In this case, each variable is related with each group by separately defining a group to which each of the variables belongs. This helps display apparatus 100 to extract data according to the purpose of analysis by the operator, so that an abnormal state and other operational states can be analyzed easily and quickly.

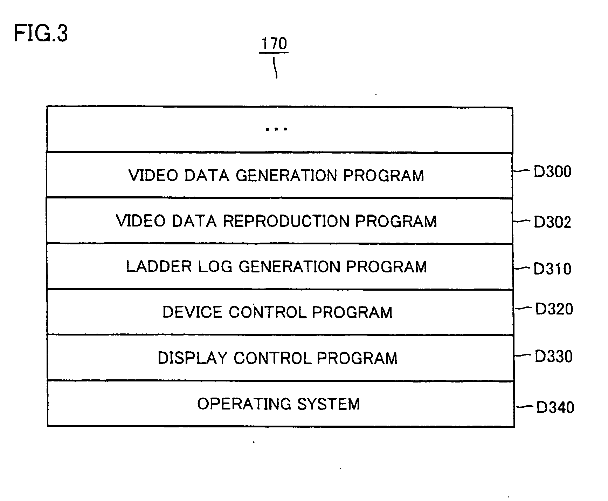

Referring to Fig. 3, the data structure in display apparatus 100 will be further described. Fig. 3 is a diagram schematically illustrating a manner of storing programs in control program memory 170.

In Fig. 3, a video data generation program is stored in a data region D300. This program is one for associating an input video signal with time information to generate a digital signal. A video data reproduction program is stored in a data region D302. This program is one for realizing processes of reading a video signal stored in video data storing unit 164 and processes of displaying moving images in display unit 150. A ladder log generation program is stored in a data region D310. This program is a program for associating track record data (ladder log) of device 180 input through input/output interface unit 154 with time information to generate digital data. A device control program is stored in a data region D320. This program is a program created beforehand by the operator for controlling device 180.

A display control program is stored in a data region D330. This program is a program for causing display 152 to display the state of device 180 based on data externally input through input unit 110 or input/output interface unit 154. This program is executed, for example, by display control unit 132.

An operating system is stored in a data region D340. This program is a program for controlling a basic operation in display apparatus 100. More specifically, performed are data input/output processing, data communications with any other device when display apparatus 100 is connected to a network, data type conversion processing for the communications, or the like. These programs are stored in control program memory 170 beforehand when display apparatus 100 is constructed.

It is noted that in place of each program described above, a circuit having a function realized by the program may realize that function. For example, a display apparatus in accordance with another aspect of the present invention may have a video data generating circuit that provides a similar output, in place of the video data generation program.

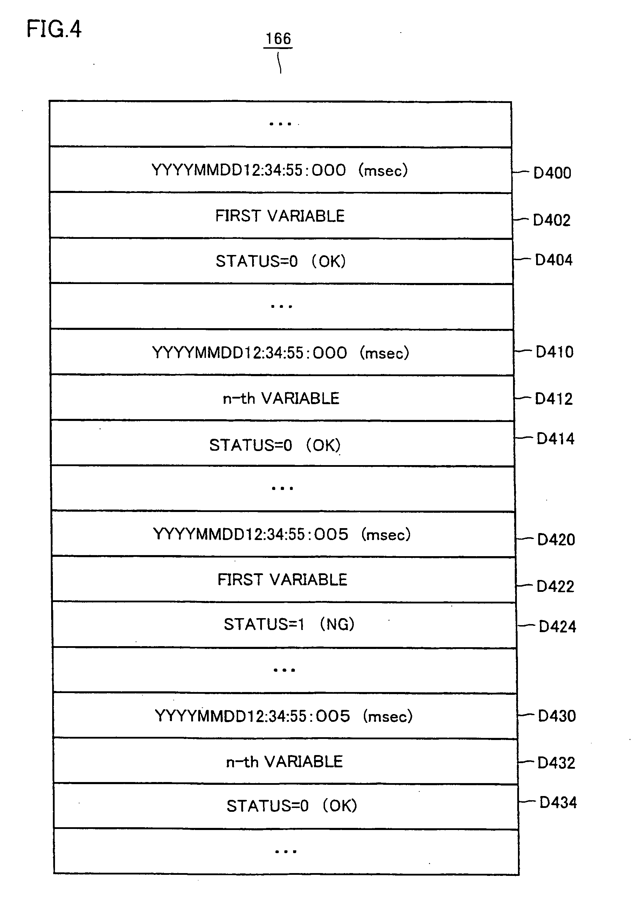

Referring to Fig. 4, the data structure in display apparatus 100 will be further described. Fig. 4 is a diagram schematically illustrating a manner of storing data in ladder log storing unit 166.

Data sent from device 180 is input to device control unit 144 through input/output interface unit 154. Device control unit 144 performs a prescribed process to generate data representing the state of each variable in device 180.

In this case, as shown in Fig. 4, the time information representing the time at which data is received is stored in a data region D400. The variable name for that data is stored in a data region D402. Information representing whether or not the input data is valid is stored in a data region D404 according to the data type of the variable. For example, when the first variable is a bit-type, 0 or 1 is stored in that region. Alternatively, if the first variable is an integer-type, for example, the values of 0 - 65535 are stored. Similarly, data for the n-th variable is stored in data regions D410 to D414.

Furthermore, when the scan time in display apparatus 100 is for example five milliseconds, data obtained five milliseconds after the aforementioned data is obtained is additionally stored in data log storing unit 166. In other words, the data for the first variable is stored in data regions D420 to D424. The data for the n-th variable is stored in data regions D430 to D434. It is noted that the scan time may be changed. Preferably, the scan time may be set depending on the operation of devices 180, 181. Therefore, it can be set such that the required video are retrieved promptly, thereby readily conducting analysis using the video.

Referring to Fig. 4 again, for example, data obtained at "12:34:55.000" of "the year of YYYY, the month of MM, the day ofDD" represents that device 180 operates normally (log=OK). The n-th variable also represents that device 180 operates normally at the same time.

On the other hand, the data obtained after the above-noted scan time, that is, at "12:34:55.005" for the first variable represents that device 180 is in a state different from the normal state, that is, an abnormal state (log=NG). At this point, the data obtained at the same time for the n-th variable represents that the other parts of device 180 operate normally.

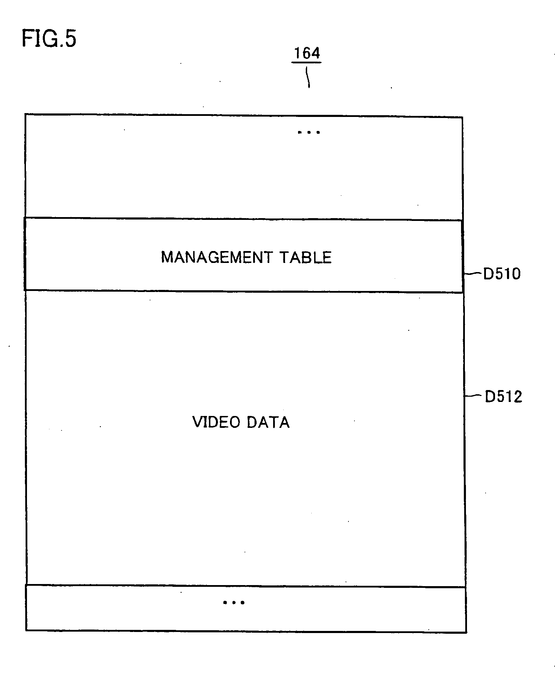

Referring to Fig. 5, the data structure of display apparatus 100 will be further described. Fig. 5 is a diagram illustrating a manner of storing data in video data storing unit 164 of display apparatus 100. Here, video data storing unit 164 records video data of device 180 picked up by camera 184.

As shown in Fig. 5, header information is stored, for example, in a data region D510. Video data is stored in a data region D512. The header information includes, for example, information representing an attribute of video data stored in data region D512. This information is one for identifying device 180 connected to display apparatus 100, information for identifying an instruction to device 180, time information associated with the video data stored in data region D512, and the like. Thus, the time is specified, and information of video data included in data region D 510 is retrieved based on that time. When the address at which the video data corresponding to the time is stored is specified, the video data stored in data region D512 is read with reference to the address.

Here, data region D512 is a region that can be accessed for data read and write and is a finite region. Data region D512 is formed, for example, of a ring buffer function. When video data is stored in the last region of data region D512, video data is written in the top region of data region D512. Therefore, for example, even when device 180 continuously operates or operates in unattended mode such as during the night time, display apparatus 100 can continue to store video data.

In addition, when a management table in data region D510 relates a flag for protecting video data with a prescribed region, that region may be protected from data overwrite. For example, a region in which video shot of an abnormal state of device 180 has already been stored may be protected from being overwritten by other data. In this way, display apparatus 100 can reliably reproduce the abnormal state of device 180, so that the operator can conduct each and every analysis in the abnormal state.

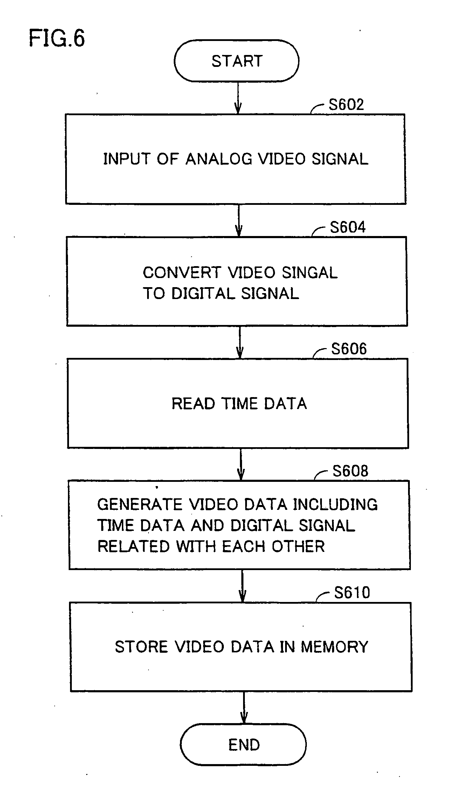

Referring to Fig. 6, the control structure of display apparatus 100 in accordance with an embodiment of the present invention will be described. Fig. 6 is a flowchart illustrating a procedure of a video data storage process performed by control unit 130 of display apparatus 100. This process is realized by executing a program prepared beforehand. For example, when PC (Personal Computer) functions as display apparatus 100, the following process is realized by CPU of that PC executing the program.

At step S602, control unit 130 of display apparatus 100 receives an input of an analog video signal output from video signal input unit 112. At step S604, control unit 130 converts the video signal to a digital signal. This conversion is performed, for example, in video data generating unit 136. It is noted that when a digital video signal is initially input to display apparatus 100, the process at step S604 is not necessary.

At step S606, control unit 130 reads time data from clock 134. Control unit 130 generates log information of device 180 based on the time data and a signal representing the state of device 180 input through input/output interface unit 154 (Fig. 4).

At step S608, control unit 130 generates video data in which the time data and the digital signal are related with each other. This generation is performed, for example, in video data generating unit 136. At step S610, control unit 130 stores the generated video data in video data storing unit 164 (Fig. 5).

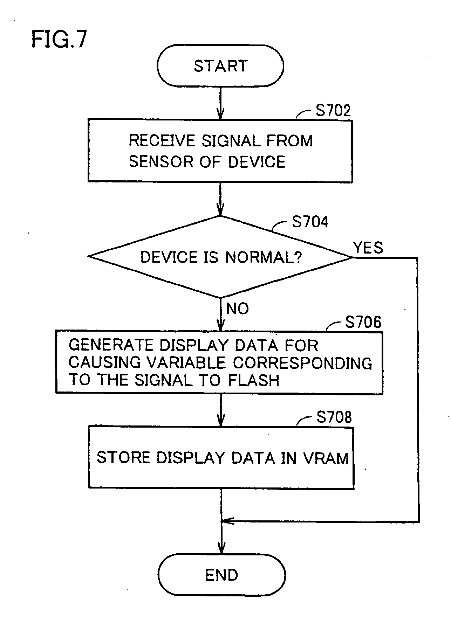

Referring to Fig. 7, the control structure of display apparatus 100 in accordance with the present embodiment will be further described. Fig. 7 is a flowchart illustrating a procedure of processes performed by control unit 130 to display the state of the device. This process is successively performed based on a signal output from device 180. This process may also be realized by CPU of PC functioning as display apparatus 100 similarly to the process shown in Fig. 6.

At step S702, control unit 130 receives a signal output from a sensor (not shown) of device 180 through input/output interface unit 154. At step S704, control unit 130 determines whether or not device 180 operates normally based on the received signal. If control unit 130 determines that the device operates normally (YES at step S704), the process ends. If not (NO at step S704), the process proceeds to step S706.

At step S706, control unit 130 generates display data for causing the symbol of the variable related with the signal to flash based on the received signal. At step S708, control unit 130 writes the generated display data in screen data storing unit 162. When data is written in screen data storing unit 162, data for displaying the symbol and data for deleting that data are alternately written. As a result, in display 152, the symbol corresponding to the variable flashes on and off.

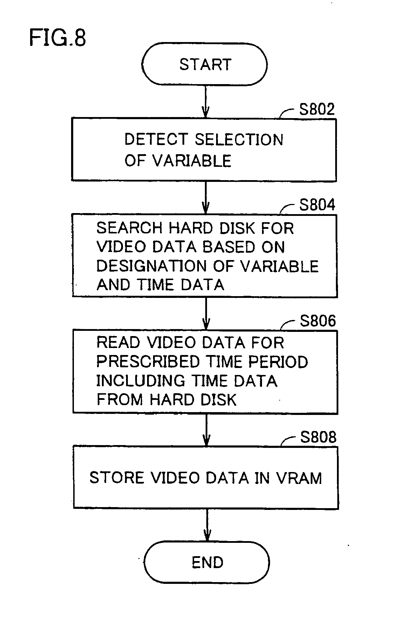

Referring to Fig. 8, the control structure of display apparatus 100 in accordance with the present embodiment will be further described. Fig. 8 is a flowchart illustrating a procedure of a video data reproduction process performed by control unit 130. This process is performed, for example, when the operator selects a symbol displayed on display 152 to enter an instruction to reproduce moving images related with the symbol. This operation may be, for example, an operation of selecting a particular image using a mouse (not shown) or may be a press on touch panel 116 arranged on the display screen of display 152.

At step S802, HMI processing unit 140 of control unit 130 detects that a variable corresponding to the symbol displayed on display 152 is selected based on a signal from touch panel 116. At step S804, control unit 130 retrieves video data corresponding to the variable and time from video data storing unit 164 based on the designation of the variable and the time data.

At step S806, control unit 130 reads video data for a prescribed period of time including the time data from video data storing unit 164. In this case, a file including the time data is first retrieved and thereafter video data is successively read from the top of the data region of that file. It is noted that the manner of reading video data is not limited thereto. For example, such video data may be read that falls into the time period from a predetermined time previous to the time corresponding to the variable to a predetermined time subsequent to that time. In addition, the read-out time, that is, the reproduction time may be changed by the operator's setting.

At step S808, control unit 130 writes the read video data in a prescribed region of screen data storing unit 162. As a result, display 152 presents moving images related with the selected symbol.

Furthermore, at this point, control HMI processing unit 142 reads an instruction executed within the time designated for video reproduction, based on a signal from display control unit 132, and outputs the instruction to HMI processing unit 140. HMI processing unit 140 specifies the variable included in the instruction and instructs display control unit 132 to display the symbol related with the variable. Display control unit 132 writes data for displaying a ladder diagram in screen data storing unit 162 based on the instruction. As a result, display 152 displays the changing state of the ladder diagram in synchronization with video reproduction.

In this way, the moving images are displayed in a region different from the region in which a ladder diagram is displayed. Accordingly, the operator can observe the operational state of device 180 in moving images with reference to the change of the symbol included in the ladder diagram, so that such an erroneous determination in that a different device or symbol is analyzed may be prevented. It is noted that the ladder diagram and the moving images are not necessarily displayed in completely different regions. At least, a region in which reproduced moving images are displayed may be different from a region in which the symbol of the variable related with the moving images is displayed.

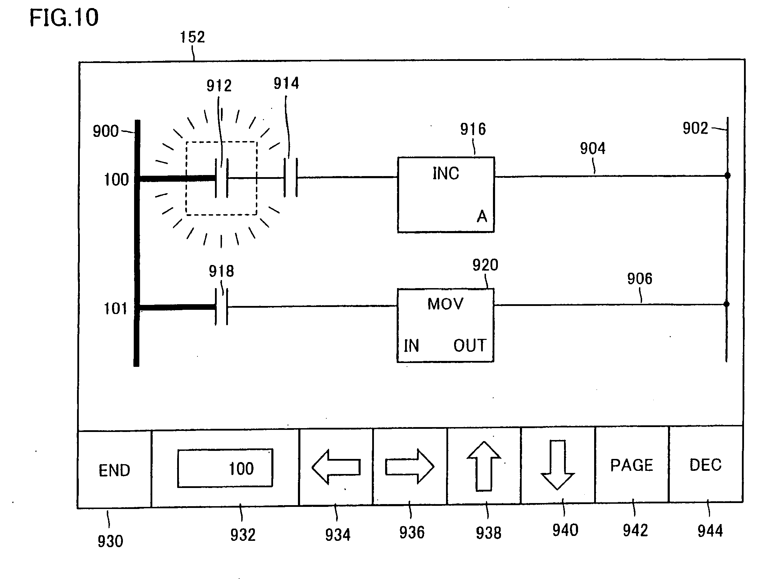

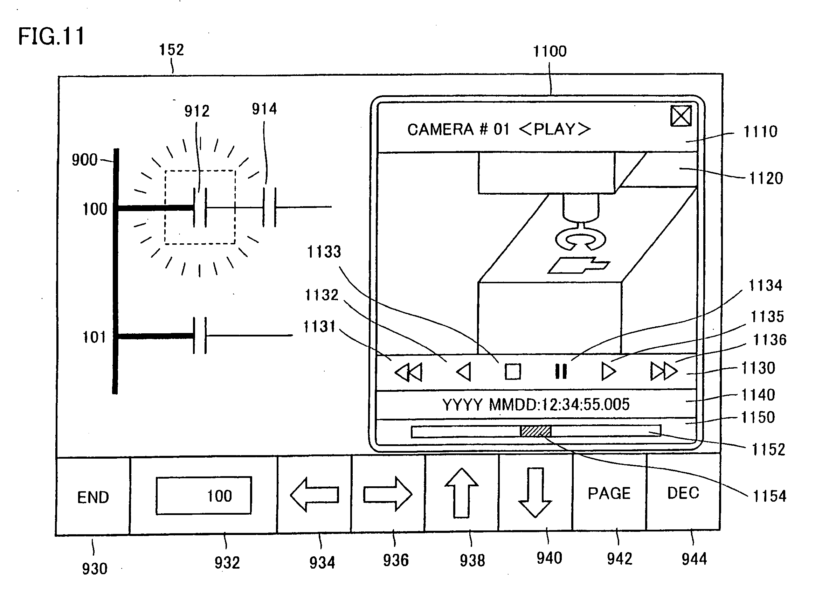

Now, referring to Fig. 9 to Fig. 11, a manner of display in display apparatus 100 will be described. Fig. 9 is a view illustrating a screen displaying a ladder diagram in display 152 of display apparatus 100. Fig. 10 is a view illustrating a manner of displaying a ladder diagram when an abnormality is detected. Fig. 11 is a view illustrating a manner of reproducing moving images of a device related to a variable from which an abnormality is detected.

As shown in Fig. 9, display 152 of display apparatus 100 displays a ladder diagram representing an operation state of device 180. The ladder diagram is a diagram in which one or more networks 904, 906 including ladder symbols 912-920 and labels relating to the ladder symbols are described with bus bars 900, 902. The ladder diagram illustrates a control procedure with the kinds of the arranged ladder symbols and the connection relation between the ladder symbols. The ladder diagram also displays the present control state of device 180 according to the display form of the ladder symbols such as a shape, color, or on/off of flash. Ladder symbol 912 is connected to bus bar 902 through ladder symbols 914, 916. Ladder symbols 912, 916 each represent A contact (normally open). Ladder symbol 914 represents AND.

In addition to the ladder diagram as described above, display 152 also displays buttons 930-944 for receiving an input of an operation on the ladder monitor screen. Here, button 930 receives an input of an instruction to terminate display of the ladder monitor. Button 932 receives an input of an instruction of a number of network (a so-called rung number). Buttons 934-940 receive an input of an instruction to move (scroll) a region displayed in the ladder monitor screen of the entire ladder diagram corresponding to the control program. Buttons 934-940 correspond to the left, right, up, and down directions, respectively. Furthermore, button 942 receives an input of an instruction to move page by page, an instruction to move rung by rung, or any other instruction. Button 944 receives an input of an instruction to switch whether a numerical value is displayed in the ladder diagram decimally or hexadecimally.

The process of displaying the ladder diagram as described above is realized by control HMI processing unit 142. More specifically, control HMI processing unit 142 analyzes the content of control program memory 170. Control HMI processing unit 142 obtains data for displaying the ladder symbol included in the ladder diagram displayed by the control program, the connection relation between the ladder symbols, the designation of a variable corresponding to each ladder symbol, and an address. Control HMI processing unit 142 instructs HMI processing unit 140 to display the ladder diagram based on the obtained data. When HMI processing unit 140 writes data for displaying the ladder diagram in screen data storing unit 162 based on the instruction, display 152 displays the ladder diagram.

Referring to Fig. 10, when an abnormality is detected for the variable corresponding to ladder symbol 912, the ladder symbol is displayed in a manner different from the other ladder symbols. For example, ladder symbol 912 flashes or is displayed in a color different from the display color of the other ladder symbols. Therefore, the operator of display apparatus 100 can easily detect the abnormal operational state of the corresponding variable, that is, device 180 based on the changed manner of displaying the ladder symbol appearing on display 152. The abnormality is such that a switch that should be switched on is kept off.

The switching of the display as described above is realized by control HMI processing unit 142 executing the control program. In other words, control HMI processing unit 142 specifies a variable necessary to display the ladder diagram based on that program. Control HMI processing unit 142 notifies device control unit 144 of the variable name. In response to the notification, device control unit 144 searches the addresses in variable memory 168 for the address at which data of the content of the variable is stored, and then notifies control HMI processing unit 142 of that address. Control HMI processing unit 142 refers to the address to obtain the content.

Control HMI processing unit 142 sends to HMI processing unit 140 an instruction to display a ladder symbol corresponding to each variable in the display form according to the content of the variable. In addition, control HMI processing unit 142 obtains the designation and address of the variable from variable memory 168 and also gives HMI processing unit 140 an instruction to provide each ladder symbol together with the variable name. It is noted that, for example, upon detection of selection of a ladder symbol in response to a touch operation on touch panel 116 by the operator, control HMI processing unit 142 displays the address, the state of the device expressed in text, and other detailed information that is not initially displayed for the ladder symbol. In this manner, display 152 can display the details of device 180 to be noted as necessary without hindering the visual recognition when the ladder diagram is schematically displayed.

Referring to Fig. 11, when the operator selects ladder symbol 912 through a touch operation on the flashing ladder symbol 912, the picked up video of device 180 for the variable corresponding to ladder symbol 912 is reproduced in response to the operation. The video is displayed in a region 1100. Region 1100 includes a region 1110 in which a title of video is displayed, a region 1120 in which video is displayed as moving images, a region 1130 in which an input of a command for video is received, a region in which the time is displayed, and a region 1150 in which a time bar 1152 is displayed to represent the reproduced moving image in time base. Time bar 1152 represents the start and end of the reproduced video. An indicator 1154 illustrates at which point of time the video displayed in region 1120 is in its reproducible time.

When display 152 of display apparatus 100 starts reproducing and displaying video of device 180, the video is displayed in region 1120 until the video data ends or until an input of stopping the reproduction is provided. A button 1131 shown in region 1130 receives an input of an instruction to rewind video when the reproduction of the selected video file is stopped. A button 1132 receives an input of an instruction to reproduce moving images to go backward in time. A button 1133 receives an input of an instruction to stop other operations such as reproduction, forward, and rewind of video. A button 1134 receives an input of an instruction to temporarily suspend reproduction of video. A button 1135 receives an input of an instruction to reproduce again the moving images of which reproduction has been stopped. A button 1136 receives an instruction to reproduce moving images in fast-forward during its reproduction. Alternatively, button 1136 receives an instruction of fast-forwarding of the moving images of which reproduction has been stopped, without reproduction.

The operation by device 180 is realized by control in milliseconds. In this case, the video of device 180 is also desirably recorded in milliseconds. Therefore, the time data shown in region 1140 indicates that video is obtained in milliseconds. It is noted that the time intervals of displaying moving images in display apparatus 100 are not limited to in milliseconds.

Shown in time bar 1152 is indicator 1154 representing the position of the moving image displayed in region 1120 in the moving images as a whole. The reproduced moving images are based on video data obtained beforehand in the ring buffer form and includes the moving images for a certain period of time from a predetermined previous time to a predetermined subsequent time with respect to the time at which an abnormality of a variable is detected. Alternatively, moving images may be displayed for a period of time from a predetermined time previous to detection of an abnormality to the time at which the abnormality is detected. Alternatively, the state after an abnormality may be displayed from the time at which the abnormality is detected to a predetermined subsequent time.

It is noted that the recording unit of the obtained video is not limited to milliseconds. In addition, the operator of display apparatus 100 may also change the reproduction time by moving indicator 1154 leftward/rightward on time bar 1152 using a mouse or any other pointing device. For example, in Fig. 11, the displayed video is at 12:34:55.005 on the year of YYYY, the month of MM, the day of DD. In this case, the operator move indicator 1154 leftward so that the video is displayed in region 1120 as the video corresponding to the past time previous to that time.

More specifically, HMI processing unit 140 calculates the amount of movement of indicator 1154 based on the coordinate data of indicator 1154 before and after the movement. HMI processing unit 140 calculates the video rewind time based on the amount of movement. HMI processing unit 140 calculates the time of the video after the movement based on the time at which the video before the movement is displayed and the rewind time. HMI processing unit 140 instructs display control unit 132 to read the video data corresponding to the calculated time. In response to the instruction, display control unit 132 reads video data corresponding to the position after the movement of indicator 1154 from video data storing unit 164 and then successively writes the video data in screen data storing unit 162. As a result, display 152 presents the past moving images.

On the other hand, when indicator 1154 is moved rightward from the position shown in Fig. 11, the video shown in region 1120 is the video related with the time corresponding to the position of indicator 1154 after the movement. Also in this case, HMI processing unit 140 performs the process as described above to realize the video display.

It is noted that the position of region 1100 may be changed in display 152. For example, the position of the region in which moving images are displayed may be changed by a so-called dragging operation using a mouse (not shown).

The operation in display apparatus 100 in accordance with the present embodiment based on the structure and flowchart as described above will be described.

### [Recording Video Data]

The image of the operational state of device 180 is picked up by camera 184. A video signal output from camera 184 is input to video signal input unit 112 (step S602). When video signal input unit 112 externally receives an input of a video signal, that signal is input to video data generating unit 136. Video data generating unit 136 converts the input signal to a digital signal (step S604). During the operation of display apparatus 100, clock 134 continuously outputs time data. Video data generating unit 136 relates the digital signal with the time data to generate video data (step S608). The generated video data is stored in video data storing unit 164 (step S610).

### [Notice of Abnormality]

Display device 100 receives a signal from device 180 through input/output interface unit 154 (step S702). Data representing the state of device 180 included in the signal is obtained. If device 180 is in an abnormal state at a certain point of time, the signal transmitted to display apparatus 100 also includes data representing the abnormality (for example, "1" is included when "0" represents a normal state). When display apparatus 100 determines that device 180 is in an abnormal state based on that data (NO at step S704), data for giving notice of abnormality of device 180 is generated (step S706). As a result, display 152 gives notice that an abnormality occurs in a particular part of device 180. For example, the symbol corresponding to the variable from which the abnormality is detected flashes or is displayed in a color (for example, red) different from the color displayed in a normal state (for example, green).

### [Reproduction of Moving Images]

When the operator presses the symbol on touch panel 116, display apparatus 100 detects that the variable representing the state of that part is selected (step S802). Control unit 130 reads necessary data from video data storing unit 164 based on the variable name corresponding to that variable and the time data (step S806). Here, while the necessary data is retrieved, for example, it is checked whether or not video data having data with a time stamp in ladder log (time data) exists in a prescribed region of video data storing unit 164.

When the particular video data is retrieved, that data is successively written in screen data storing unit 162 to be displayed in display 152 (step S808). If the time unit of the video data is, for example, ten seconds, the video for ten seconds is reproduced. Alternatively, if the operator does not particularly give an instruction to stop reproduction, that video data is kept being held in screen data storing unit 162. In this case, display 152 repeatedly reproduces moving images for a particular time. Therefore, the operator can analyze the cause of abnormality in device 180 based on the reproduced video.

As described above, in display apparatus 100 in accordance with the present embodiment, data representing the state of device 180 (log data) and video data representing the state of device 180 are stored in association with each other through time data. In this way, when particular time information is applied to display apparatus 100, display apparatus 100 can easily retrieve corresponding video data based on the time information. Moving images based on video data are repeatedly reproduced for a predetermine period of time unless an instruction to stop reproduction is given, so that the operator can easily grasp the situation in device 180. In addition, since log data is continuously stored, for example, when a particular event frequently takes place, any necessary measures can be taken quickly by retrieving the past data for the same event.

It is noted that although in the present embodiment display apparatus 100 is connected only to device 180 by way of illustration, the present invention is not limited thereto. For example, a plurality of display apparatuses 100 may be connected via a network and the state of each device (not shown) controlled by each display apparatus 100 may be displayed in a display apparatus that does not control the device. In this way, the state of each device can be monitored at a particular location (for example, a central control room). In addition, the administrator does not have to go to the display apparatus that controls each device, even in an abnormal state of the device, so that the situation can be observed quickly, thereby preventing delay in measures.

Furthermore, in the present embodiment, when one symbol flashes, the moving images are displayed in response to the selection of the symbol. However, the display manner is not limited to the one as described above. When a plurality of symbols flash, the moving images corresponding to each selected symbol may be displayed. In this case, video data related with the selected symbol is read from video data storing unit 164 and then displayed in display 152.

Alternatively, based on the selected symbol, video data related with each of other flashing symbols may be read in increasing or decreasing chronological order. Alternatively, the order in which the moving image or still image corresponding to each symbol is displayed may be set beforehand. For example, when an input of an instruction of reproduction is detected, the moving image or still image may displayed in order starting from the symbol in which an abnormality occurs, or may be displayed backward in time.

In this case, for each symbol, display 152 displays, for example, moving images for each predetermined time period or a snap-shot image at a moment of a part corresponding to each symbol. In this way, the operator can watch the state of series of changes for a plurality of symbols, so that the operator can grasp more precise situations as compared with when the moving image of a single symbol is observed.

### <First Modification>

In the following, a first modification to the present embodiment will be described. In the foregoing embodiment, when display apparatus 100 detects predetermined abnormality based on an input signal, a ladder symbol appearing on display 152 flashes. The setting of the conditions of controlling flashing of a ladder symbol is not limited to that in the foregoing embodiment. Furthermore, as shown in Fig. 11, the trigger that defines the start of video displayed in region 1120 is not limited to the conditions as described above. More specifically, the operator of display apparatus 100 registers an event beforehand to realize a notice operation such as to flash or highlight a ladder symbol when the event is detected. Here, the event is not limited to satisfaction of a prescribed condition in device 180 to be monitored by display apparatus 100 and includes an external input of a signal to target system 186 including device 180, an input of an instruction by the operator, and the like.

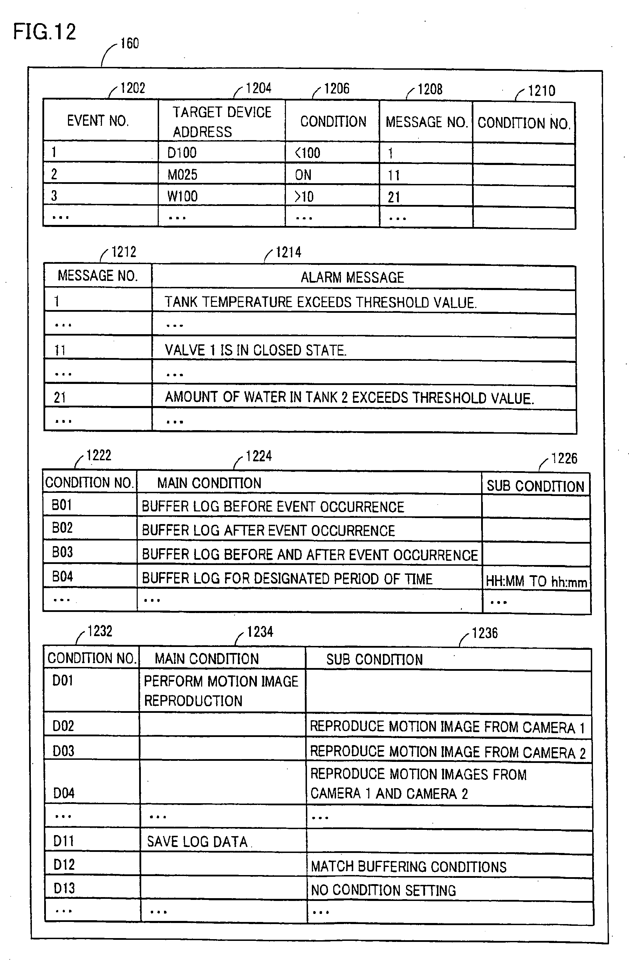

Referring to Fig. 12, the data structure of display apparatus 100 in accordance with this modification will be described. Fig. 12 is a diagram illustrating a manner of storing data stored in storage unit 160. These data may be stored in any of storage portions included in storage unit 160 in Fig. 1 or may be stored in a particular region newly allotted or a recording medium.

Storage unit 160 includes regions 1202-1236 for storing data. A number for identifying an event registered by the operator in display apparatus 100 is stored in region 1202. An address of a device for the event is stored in region 1204. A condition on which an event is issued is stored in region 1206. A number for specifying a message prepared beforehand is stored in region 1208. A number that specifies a condition (buffering condition) set by the operator is stored in region 1210. Here, a buffering condition refers to a condition on which a signal representing a state of a device input to display apparatus 100 is stored. If this condition is satisfied, the signal is stored in ladder log storing unit 166. Otherwise, the signal is not stored.

A number for specifying a message is stored in region 1212. This number corresponds to a number stored in region 1208. An alarm message created beforehand is stored in region 1214. This message may be selected by the operator from message choices prepared beforehand. Alternatively, when display apparatus 100 has a function of receiving a text input, the operator may use the function to create a message.

A number that specifies a buffering condition is stored in region 1222. Data for displaying the conditions in display 152 are stored in region 1224 and region 1226. These conditions may be selected by the operator. In the present embodiment, the condition that specifies a period of time is included in the condition for performing a notice operation. Therefore, some conditions consist of a main condition (region 1224) and a sub condition (region 1226).

A number that specifies the setting of display in display 152 is stored in region 1232. A message representing a main setting is stored in region 1234. A message representing a sub setting is stored in region 1236. When data stored in region 1234 and region 1236 is read out, each message appears in display 152.

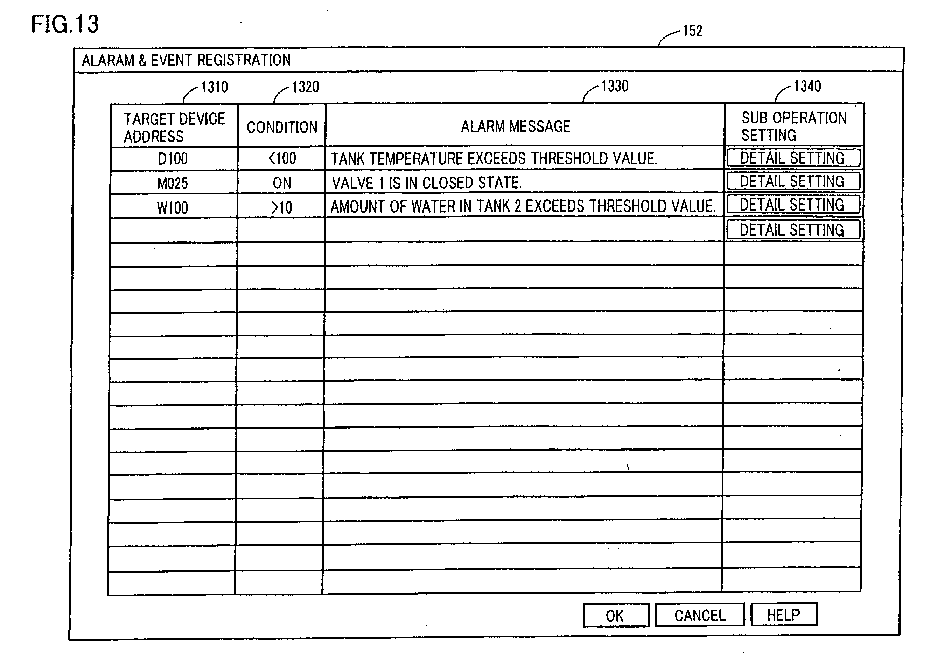

It is noted that the data structure for realizing display apparatus 100 in accordance with this modification is not limited to the manner shown in Fig. 12. Each data described above may be stored in any region in storage unit 160. When the data is written in screen data storing unit 162, the screens shown in Fig. 13 to Fig. 16 are displayed.

Referring to Fig. 13 to Fig. 16, a display manner in display apparatus 100 in accordance with this modification will be described. Fig. 13 to Fig. 16 are views each illustrating a setting screen for alarm and event in display 152 of display apparatus 100.

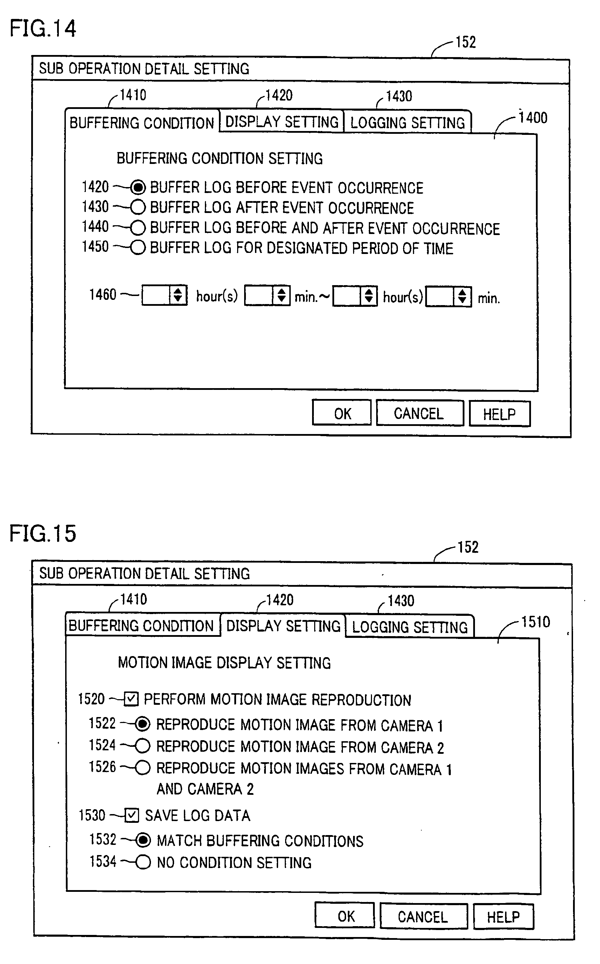

As shown in Fig. 13, display 152 presents a display screen of "alarm & event registration". This screen includes regions 1310-1340. An address of a device receiving an alarm is displayed in region 1310. This display is based on data stored in region 1204 of storage unit 160. A condition is displayed in region 1320. This display is based on data stored in region 1206 of storage unit 160. A message set for each device is displayed in region 1330. This display is based on data stored in regions 1210, 1212 and 1214. An icon that receives data input for setting details for each device address is displayed in region 1340. When the operator presses this icon, as shown in Fig. 14, a screen for setting the details for the corresponding device address is displayed.

In Fig. 14, a "sub operation detail setting" screen appears on display 152. This screen includes a tab 1410 for buffering condition, a tab 1420 for display setting, and a tab for logging setting. Display device 100 in accordance with this modification presents a buffering condition screen 1400 as an initial screen when the "sub operation detail setting" screen is displayed.

Screen 1400 is a screen for the operator to input a setting to define the buffering condition. According to the condition set in this screen, display apparatus 100 stores the input log information (signals of variables corresponding to devices 180, 181). The buffering condition is set by an input to radio buttons 1420-1460. In the example shown in Fig. 14, radio button 1420 is selected. Therefore, for the variable corresponding to screen 1410, a log previous to occurrence of the set event is buffered. On the other hand, when radio button 1450 is selected, an input of time data using radio button 1460 is also requested. When the operator inputs time data, that data is stored in region 1226 as shown in Fig. 12. Display device 100 stores log information for a designated period of time according to the data stored in region 1226. Therefore, the operational state of device 180 can be monitored only in a time frame during which monitoring is particularly necessary, thereby preventing increase of unnecessary data and accelerating retrieval of data in an abnormal state.

When the operator selects a tab 1420 on the screen shown in Fig. 14, display apparatus 100 causes to display 152 to switch the screen in response to the detection of the selection. In other words, a screen 1510 shown in Fig. 15 is displayed.

In Fig. 15, screen 1510 is a screen for defining a manner of displaying motion images in display 152. Screen 1510 provides radio buttons 1520-1534 for receiving a selection of setting by the operator. The operator selects any radio button so that a condition for displaying motion image in display 152 is set.

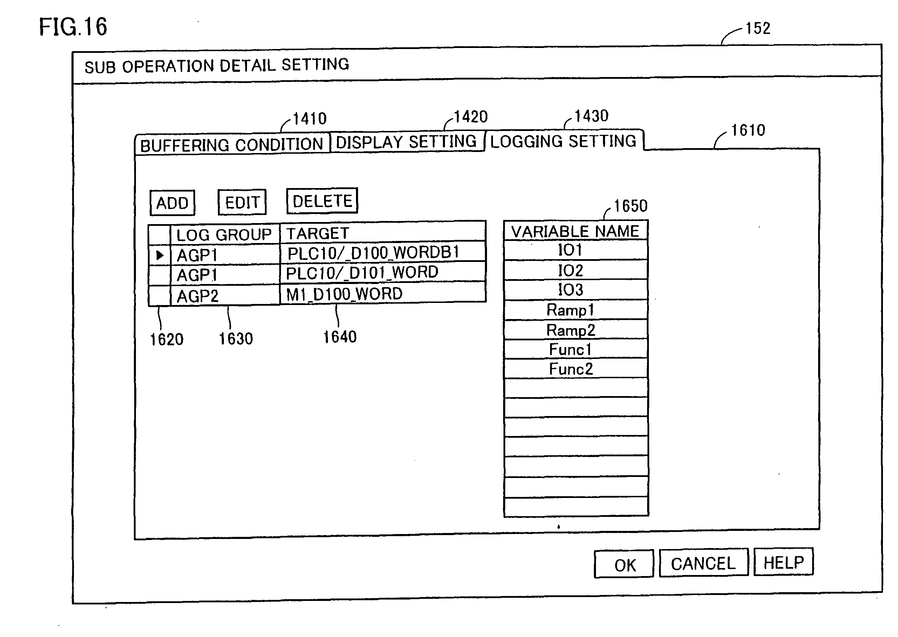

In the example shown in Fig. 15, radio buttons 1520, 1522 are selected. Therefore, the motion image from camera 1 is reproduced. In addition, radio button 1530 is selected. Therefore, a buffering condition set for log data is associated with reproduction of motion image. As a result, during reproduction of motion images, a change of the variable related with the log is reproduced, for example, in the ladder diagram. When the operator selects a tab 1430, a logging setting screen appears as shown in Fig. 16.

In Fig. 16, a screen 1610 includes regions 1620-1650. A mark indicating a target of logging setting is displayed in region 1620. The designation of a group subjected to logging is displayed in region 1630. The designation of a variable included in the group is displayed in region 1640. This display is realized by storing data representing a log group and data representing a variable included in the log group in relation with each other in storage unit 160. In this way, for example, devices of which operational states are related to each other are put together, so that the analysis can also be conducted collectively.

The designation of a variable that may be included in a log group is displayed in region 1650. The operator selects the designation of the variable displayed in region 1650 while selecting a log group, so that the variable can be included in the log group. In this case, the data representing a newly selected variable is further related to the data representing the log group to be stored in storage unit 160.

In the example shown in Fig. 16, a log group "APG1" is a setting target. This group includes a variable "PLC 10" and a variable "_D 100_WORDB1" to be subjected to logging. Therefore, as long as the logging of the group is set valid, the history of the above-noted variables is stored in ladder log storage unit 166.

As described above, display apparatus 100 in accordance with this modification performs a prescribed notice operation when the set event occurs based on the condition preset by the operator. In addition, display apparatus 100 can log only a variable selected beforehand. Such variables may be grouped, so that the condition for logging a variable included in the same group can easily be set. This enables monitoring according to a purpose of the operator, thereby improving the efficiency of the operation management using display apparatus 100.

It is noted that the setting of the conditions using the setting screen can also be performed in a device other than display apparatus 100. For example, a similar process can be performed by a PC that can execute the software for creating the screen displayed in display apparatus 100. In this case, during execution of such software, the PC additionally executes software for allowing the setting by displaying the screens shown in Fig. 13 to Fig. 16. In this manner, the operator can perform the creation of screen images and the operation for setting alarms and events in parallel. Then, the operator can transfer the data for creating images and the set data altogether from the PC to the display apparatus. As a result, the consistency between these data may be kept and the maintenance of the display apparatus can be simplified.

It is noted that display apparatus 100 in accordance with the embodiment and modification thereof of the present invention may be realized in hardware by combining circuits for realizing the processes or may be realized in software by causing CPU or any other processor to execute a program realizing the processes.

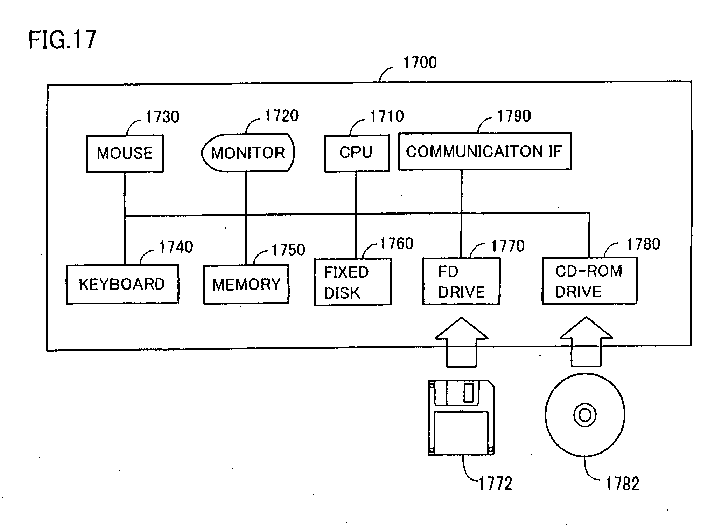

Now, referring to Fig. 17, a computer system that realizes display apparatus 100 in accordance with the embodiment of the present invention will be described. Fig. 17 is a block diagram illustrating a hardware configuration of a computer system 1700:

Computer system 1700 includes a CPU 1710, a monitor 1720, a mouse 1730, a keyboard 1740, a memory 1750, a fixed disk 1760, an FD (Flexible Disk) drive 1770, a CD-ROM (Compact Disc-Read Only Memory) drive 1780, and a communication IF (Interface) 1790, which are connected to one another through a bus. An FD 1772 is inserted into FD drive 1770. A CD-ROM 1782 is inserted into CD-ROM 1780.

In this case, CPU 1710 functions as control unit 130 in display apparatus 100 shown in Fig. 1. The functions realized by control unit 130 are realized by a program executed by CPU 1710. More specifically, the process in computer system 1700 that realizes display apparatus 100 is realized by each hardware and software (program product) executed by CPU 1710. Such software may be stored beforehand in memory 1750 or fixed disk 1760. Alternatively, such software may be stored and distributed in FD 1772, CD-ROM 1782 or any other recording medium, read from the recording medium by a device driving the recording medium, such as CD-ROM drive 1780, and then stored in fixed disk 1760. The software is read from memory 1750 or fixed disk 1760 and executed by CPU 1710.

The hardware of computer system 1700 shown in Fig. 17 is generally known per se. Therefore, the most essential part of the present invention may consist in the software recorded in memory 1750, fixed disk 1760, FD 1772, CD-ROM 1782, or any other recording medium. It is noted that the operation of each hardware of computer system 1700 is well known and therefore the description thereof will not be repeated herein.

### <Second Modification>

In the following, a second modification to the embodiment of the present invention will be described. Display device in accordance with this modification may be connected to another display apparatus having a similar function via LAN (Local Area Network) or any other communication line. In other words, a plurality of display apparatuses 100 may constitute one system. In this case, each display apparatus 100 stores a signal from devices 180, 181 and a video signal from camera 184 in relation with each other and can also give notice of abnormality in another display apparatus 100. It is noted that the connection with another display apparatus 100 is realized by the input/output interface unit shown in Fig. 1 or communication IF 1790 shown in Fig. 17.

Such a system is realized, for example, in a manner described below. First, display apparatus 100 and another display apparatus 100 are networked to each other to allow data communications in a predetermined communication protocol. Display device 100 receives an input of a signal representing a state of another device obtained in another display apparatus 100. When display apparatus 100 receives a signal representing an abnormality from another display apparatus 100, display apparatus 100 causes a symbol corresponding to a variable in another display apparatus 100 to flash in a predetermined region in order to give notice of the state of another display apparatus 100.

When the operator of display apparatus 100 selects the symbol, display apparatus 100 receives video data stored in relation with that symbol from another display apparatus 100. In response to receiving the data, device control unit 144 outputs to control HMI processing unit 142 an instruction to display the moving images. Control HMI processing unit 142 causes display control unit 132 to perform processes of writing the received video data based on the instruction. When display control unit 132 writes the video data in screen data storing unit 162, the moving images appear on display 152 of display apparatus 100.

As described above, in display apparatus 100 in accordance with this modification, when another display apparatus 100 detects an abnormality of a device, the operator of display apparatus 100 can still observe the moving images related with a signal of the abnormality without going to another display apparatus 100. Accordingly, for example, the state can be grasped quickly, so that any measures such as a recovery operation can be taken promptly. Therefore, the efficiency (operation rate, productivity, and the like) of the system including display apparatus 100 can be improved.

## Claims

1. A display apparatus comprising:
storage means (168) for storing a control program having a plurality of instructions and symbol data for displaying a symbol related to each of said plurality of instructions;
control means (144) for controlling control target equipment electrically connected to said display apparatus by executing each of said plurality of instructions;
display means (152) for displaying an image;
first display control means (132) based on the symbol data corresponding to the instruction executed by said control means for causing the symbol corresponding to said executed instruction to be displayed in a first display region in said display means;
video signal input means (112) for receiving an input of video data generated based on a picked-up image of said control target equipment;
video data storing means (164) for storing said video data;
relation means (136) for relating the symbol data corresponding to the instruction executed by said control means to the video data stored in said video data storing means;
detection means (140) for detecting designation of the symbol displayed in said first display region; and
second display control means (132) responsive to detection of said designation for causing a moving image to be displayed in a second display region in said display means based on the video data related to the symbol data corresponding to the symbol displayed in said first display region.

2. The display apparatus according to claim 1, further comprising timer means (132) for measuring a time, wherein
said relation means relates the symbol data corresponding to the symbol displayed in said first display region to the video data input through said video signal input means based on the time measured by said timer means.

3. The display apparatus according to claim 2, further comprising:
state signal input means (154) for receiving an input of a state signal indicating a state of said control target equipment;
log generation means (138) for generating log information representing history of an operation of said control target equipment based on said time and said state signal; and
log storing means (166) for storing said log information, wherein
said relation means relates the symbol data corresponding to the symbol displayed in said first display region to said log information.

4. The display apparatus according to claim 3, wherein
said state signal input means receives an input of a signal indicating an abnormality in said control target equipment,
said log generation means generates log information indicating an abnormality in said control target equipment when said signal indicating an abnormality is input,
said relation means relates a time at which said log information indicating an abnormality is generated to said log information indicating an abnormality for storage in said log storing means, and
said first display control means causes the symbol to be displayed in said first display region by making a difference between an output form of the symbol data for displaying the symbol corresponding said log information indicating an abnormality and an output form of the symbol data for displaying the symbol corresponding to a normal state in said control target equipment, so that a first display manner in said display means of the symbol corresponding to said log information indicating an abnormality differs from a second display manner in said display means of the symbol corresponding to said normal state.

5. The display apparatus according to claim 4, wherein
said detection means detects designation of the symbol displayed in said first display manner,
said display apparatus further comprising:
reading means (132) for reading time corresponding to said log information indicating an abnormality from said log storing means based on detection of said designation; and
reproduction means (132) for reading video data corresponding to a predetermined period of time from said read time, wherein
said second display control means causes a moving image to be displayed in said second display region based on the video data read by said reproduction means.

6. The display apparatus according to claim 4, wherein
said detection means detects designation of the symbol displayed in said first display manner,
said display apparatus further comprising:
reading means (132) for reading time corresponding to said log information indicating an abnormality from said log storing means based on detection of said designation; and
reproduction means (132) for reading video data corresponding to a period of time from predetermined time previous to said time to predetermined time subsequent to said time, wherein
said second display control means causes a moving image to be displayed in said second display region based on the video data read by said reproduction means.

7. The display apparatus according to claim 4, wherein
said first display control means controls said display means such that a plurality of symbols are displayed in said first display region in said first display manner,
said detection means detects designation of any symbol among said plurality of symbols, and
said second display control means includes
time data reading means for reading each time corresponding to each of said plurality of symbols from said log storing means,
video data reading means for reading video data corresponding to a predetermined period of time from said read each time for each of said plurality of symbols from said log storing means, and
reproduction control means for causing a moving image to be displayed in said second display region in time order or backward in time from said time corresponding to any symbol of which said designation is detected based on said read video data.

8. The display apparatus according to any of claims 5 to 7, wherein said display means displays said first display region and said second display region in the same screen.

9. The display apparatus according to claim 1, wherein
said video signal input means receives an input of each video data generated based on an image of said control target equipment picked up by each of a plurality of image picking-up means,
said relation means relates each symbol data corresponding to each of a plurality of instructions executed by said control means to said each video data, and
said second display control means causes each moving image to be displayed in said second display region based on said each video data.

10. A program product causing a computer to function as a display apparatus, said program product causing said computer to execute the steps of:
reading a control program having a plurality of instructions and symbol data for displaying a symbol related to each of said plurality of instructions from storage means for storing data;
controlling control target equipment electrically connected to said computer by executing each of said plurality of instructions;
based on the symbol data corresponding to the instruction executed at said controlling step, causing the symbol corresponding to said executed instruction to be displayed in a first display region in display means for displaying an image;
receiving an input of video data generated based on a picked-up image of said control target equipment;
relating the symbol data corresponding to said executed instruction to said video data (S608);
storing said video data in said storage means (S610);
detecting designation of the symbol displayed in said first display means (S802); and
in response to detection of said designation, causing a moving image to be displayed in a second display region in said display means based on the video data related to the symbol data corresponding to the symbol displayed in said first display region.

11. A recording medium storing the program product according to claim 10.

## Patentansprüche

1. Anzeigevorrichtung, mit:
Speichermitteln (168) zum Speichern eines Steuerprogramms, das mehrere Befehle und Symboldaten zum Anzeigen eines mit jedem der mehreren Befehle in Beziehung stehenden Symbols besitzt;
Steuermitteln (144) zum Steuern einer Steuerzielanlage, die mit der Anzeigevorrichtung elektrisch verbunden ist, durch Ausführen jedes der mehreren Befehle;
Anzeigemitteln (152) zum Anzeigen eines Bildes;
ersten Anzeigesteuermitteln (132), um anhand der Symboldaten, die dem durch die Steuermittel ausgeführten Befehl entsprechen, zu veranlassen, dass das dem ausgeführten Befehl entsprechende Symbol in einem ersten Anzeigebereich in den Anzeigemitteln angezeigt wird;
Videosignal-Eingangsmitteln (112) zum Empfangen eines Eingangs von Videodaten, die anhand eines aufgenommenen Bildes der Steuerzielanlage erzeugt werden;
Videodaten-Speichermitteln (164) zum Speichern der Videodaten;
Beziehungsherstellungsmitteln (136), um zwischen den Symboldaten, die dem durch die Steuermittel ausgeführten Befehl entsprechen, und den in den Videodaten-Speichermitteln gespeicherten Videodaten eine Beziehung herzustellen;
Detektionsmitteln (140), um die Bezeichnung des in dem ersten Anzeigebereich angezeigten Symbols zu detektieren; und
zweiten Anzeigesteuermitteln (132), die in Reaktion auf die Detektion der Bezeichnung veranlassen, dass ein bewegtes Bild in einem zweiten Anzeigebereich in den Anzeigemitteln anhand der Videodaten angezeigt wird, die mit den Symboldaten in Beziehung stehen, die dem in dem ersten Anzeigebereich angezeigten Symbol entsprechen.

2. Anzeigevorrichtung nach Anspruch 1, ferner mit Zeitgebermitteln (132) zum Messen einer Zeit, wobei
die Beziehungsherstellungsmittel zwischen den Symboldaten, die dem in dem ersten Anzeigebereich angezeigten Symbol entsprechen, und den über die Videosignal-Eingangsmittel eingegebenen Videodaten anhand der durch die Zeitgebermittel gemessenen Zeit eine Beziehung herstellen.

3. Anzeigevorrichtung nach Anspruch 2, ferner mit:
Zustandssignal-Eingangsmitteln (154) zum Empfangen eines Eingangs eines Zustandssignals, das einen Zustand der Steuerzielanlage angibt;
Protokollerzeugungsmitteln (138), um Protokollinformationen, die die Historie einer Operation der Steuerzielanlage repräsentieren, anhand der Zeit und des Zustandssignals zu erzeugen; und
Protokollspeichermitteln (166), um die Protokollinformationen zu speichern, wobei
die Beziehungsherstellungsmittel zwischen den Symboldaten, die dem in dem ersten Anzeigebereich angezeigten Symbol entsprechen, und den Protokollinformationen eine Beziehung herstellen.

4. Anzeigevorrichtung nach Anspruch 3, wobei
die Zustandssignal-Eingangsmittel einen Eingang eines Signals empfangen, das eine Anomalie in der Steuerzielanlage angibt,
die Protokollerzeugungsmittel Protokollinformationen erzeugen, die eine Anomalie in der Steuerzielanlage angeben, wenn das eine Anomalie angebende Signal eingegeben wird,
die Beziehungsherstellungsmittel zwischen einer Zeit, zu der die eine Anomalie angebenden Protokollinformationen erzeugt werden, und den Protokollinformationen, die eine Anomalie angeben, eine Beziehung herstellen, um sie in den Protokollspeichermitteln zu speichern, und
die ersten Anzeigesteuermittel veranlassen, dass das Symbol in dem ersten Anzeigebereich angezeigt wird, indem sie eine Differenz zwischen einer Ausgabeform der Symboldaten zum Anzeigen des Symbols, das den die Anomalie angebenden Protokollinformationen entspricht, und einer Ausgabeform der Symboldaten für die Anzeige des Symbols, das einem normalen Zustand in der Steuerzielanlage entspricht, bilden, so dass sich eine erste Anzeigeweise in den Anzeigemitteln des Symbols, das den eine Anomalie angebenden Protokollinformationen entspricht, von einer zweiten Anzeigeweise in den Anzeigemitteln des Symbols, das dem Normalzustand entspricht, unterscheidet.

5. Anzeigevorrichtung nach Anspruch 4, wobei
die Detektionsmittel die Bezeichnung des auf die erste Anzeigeweise angezeigten Symbols detektieren,
wobei die Anzeigevorrichtung ferner enthält:
Lesemittel (132) zum Lesen der Zeit, die den eine Anomalie angebenden Protokollinformationen entspricht, aus den Protokollspeichermitteln anhand der Detektion der Bezeichnung; und
Wiedergabemittel (132) zum Lesen von Videodaten, die einer vorgegebenen Zeitdauer ab der Lesezeit entsprechen, wobei
die zweiten Anzeigesteuermittel veranlassen, dass ein bewegtes Bild in dem zweiten Anzeigebereich anhand der durch die Wiedergabemittel gelesenen Videodaten angezeigt wird.

6. Anzeigevorrichtung nach Anspruch 4,
wobei die Detektionsmittel die Bezeichnung des auf die erste Anzeigeweise angezeigten Symbols detektieren,
wobei die Anzeigevorrichtung ferner enthält:
Lesemittel (132) zum Lesen einer Zeit, die den eine Anomalie angebenden Protokollinformationen entsprechen, aus den Protokollspeichermitteln anhand der Detektion der Bezeichnung; und
Wiedergabemittel (132) zum Lesen von Videodaten, die einer Zeitdauer von der vorgegebenen Zeit vor dieser Zeit zu einer vorgegebenen Zeit nach dieser Zeit entsprechen, wobei
die zweiten Anzeigesteuermittel veranlassen, dass ein bewegtes Bild in dem zweiten Anzeigebereich anhand der durch die Wiedergabemittel gelesenen Videodaten angezeigt wird.

7. Anzeigevorrichtung nach Anspruch 4, wobei
die ersten Anzeigesteuermittel die Anzeigemittel in der Weise steuern, dass mehrere Symbole in dem ersten Anzeigebereich auf die erste Anzeigeweise angezeigt werden,
die Detektionsmittel die Bezeichnung irgendeines Symbols unter den mehreren Symbolen detektieren und
die zweiten Anzeigesteuermittel enthalten:
Zeitdaten-Lesemittel zum Lesen jeder Zeit, die jedem der mehreren Symbole entspricht, aus den Protokollspeichermitteln,
Videodaten-Lesemittel zum Lesen von Videodaten, die einer vorgegebenen Zeitdauer ab dem Lesen jeder Zeit für jedes der mehreren Symbole aus den Protokollspeichermitteln entsprechen, und
Wiedergabesteuermittel, um zu veranlassen, dass ein bewegtes Bild in dem zweiten Anzeigebereich in zeitlicher Ordnung oder zeitlich rückwärts ab der Zeit, die irgendeinem Symbol entspricht, dessen Bezeichnung anhand der gelesenen Videodaten detektiert wird, angezeigt wird.

8. Anzeigevorrichtung nach einem der Ansprüche 5 bis 7, wobei die Anzeigemittel den ersten Anzeigebereich und den zweiten Anzeigebereich auf dem selben Bildschirm anzeigen.

9. Anzeigevorrichtung nach Anspruch 1, wobei
die Videosignal-Eingangsmittel einen Eingang sämtlicher Videodaten, die anhand eines Bildes der Steuerzielanlage, das von jedem von mehreren Bildaufnahmemitteln aufgenommen wird, erzeugt werden, empfangen,
die Beziehungsherstellungsmittel zwischen sämtlichen Symboldaten, die jedem von mehreren Befehlen entsprechen, die von den Steuermitteln ausgeführt werden, und sämtlichen Videodaten eine Beziehung herstellen und
die zweiten Anzeigesteuermittel veranlassen, dass jedes bewegte Bild in dem zweiten Anzeigebereich anhand aller Videodaten angezeigt wird.

10. Programmprodukt, das einen Computer dazu veranlasst, als eine Anzeigevorrichtung zu arbeiten, wobei das Programmprodukt den Computer dazu veranlasst, die folgenden Schritte auszuführen:
Lesen eines Steuerprogramms, das mehrere Befehle und Symboldaten zum Anzeigen eines Symbols, das mit jedem der mehreren Befehle in Beziehung steht, besitzt, aus Speichermitteln zum Speichern von Daten;
Steuern einer Steuerzielanlage, die mit dem Computer elektrisch verbunden ist, durch Ausführen jedes der mehreren Befehle;
anhand der Symboldaten, die dem im Steuerschritt ausgeführten Befehl entsprechen, Veranlassen, dass das dem ausgeführten Befehl entsprechende Symbol in einem ersten Anzeigebereich in Anzeigemitteln zum Anzeigen eines Bildes angezeigt wird;
Empfangen eines Eingangs von Videodaten, die anhand eines aufgenommenen Bildes der Steuerzielanlage erzeugt werden;
Herstellen einer Beziehung zwischen den Symboldaten, die dem ausgeführten Befehl entsprechen, und den Videodaten (S608);
Speichern der Videodaten in den Speichermitteln (S610);
Detektieren einer Bezeichnung des Symbols, das in den ersten Anzeigemitteln (S802) angezeigt wird; und
in Reaktion auf die Detektion der Bezeichnung Veranlassen, dass ein bewegtes Bild in einem zweiten Anzeigebereich in den Anzeigemitteln angezeigt wird, anhand der Videodaten, die mit den Symboldaten in Beziehung stehen, die dem in dem ersten Anzeigebereich angezeigten Symbol entsprechen.

11. Aufzeichnungsmedium, das das Programmprodukt nach Anspruch 10 speichert.

## Revendications

1. Appareil d'affichage comprenant :
des moyens de stockage (168) pour stocker un programme de commande comportant une multiplicité d'instructions et de données de symbole pour afficher un symbole associé à chaque instruction de la multiplicité d'instructions ;
des moyens de commande (144) pour commander un équipement cible de commande relié électriquement audit appareil d'affichage en exécutant chaque instruction de ladite multiplicité d'instructions ;
des moyens d'affichage (152) pour afficher une image ;
des premiers moyens de commande d'affichage (132) basés sur les données de symbole correspondant à l'instruction exécutée par lesdits moyens de commande pour conduire le symbole correspondant à ladite instruction exécutée à être affiché dans une première zone d'affichage desdits moyens d'affichage ;
des moyens d'entrée de signal vidéo (112) pour recevoir une entrée de données vidéo générées sur la base d'une image saisie dudit équipement cible de commande ;
des moyens de stockage de données vidéo (164) pour stocker lesdites données vidéo ;
des moyens de mise, en relation (136) pour mettre en relation les données de symbole correspondant à l'instruction exécutée par lesdits moyens de commande avec les données vidéo stockées dans lesdits moyens de stockage de données vidéo ;
des moyens de détection (140) pour détecter la désignation du symbole affiché dans ladite première zone d'affichage ; et
des seconds moyens de commande d'affichage (132) réagissant à la détection de ladite désignation en conduisant une image animée à être affichée dans une seconde zone d'affichage desdits moyens d'affichage sur la base des données vidéo associées aux données de symbole correspondant au symbole affiché dans ladite première zone d'affichage.

2. Appareil d'affichage selon la revendication 1, comprenant en outre des moyens de temporisation (132) pour mesurer un temps, dans lequel
lesdits moyens de mise en relation mettent en relation les données de symbole correspondant au symbole affiché dans ladite première zone d'affichage avec les données vidéo entrées par l'intermédiaire desdits moyens d'entrée de signal vidéo sur la base du temps mesuré par lesdits moyens de temporisation.

3. Appareil d'affichage selon la revendication 2, comprenant en outre :
des moyens d'entrée de signal d'état (154) pour recevoir une entrée d'un signal d'état indiquant un état dudit équipement cible de commande ;
des moyens de génération de journal (138) pour générer des informations de journal représentant l'historique d'une opération dudit équipement cible de commande sur la base dudit temps et dudit signal d'état ; et
des moyens de stockage de journal (166) pour stocker lesdites informations de journal, dans lequel
lesdits moyens de mise en relation mettent en relation les données de symbole correspondant au symbole affiché dans ladite première zone d'affichage avec lesdites informations de journal.

4. Appareil d'affichage selon la revendication 3, dans lequel
lesdits moyens d'entrée de signal d'état reçoivent une entrée d'un signal indiquant une anomalie dans ledit équipement cible de commande,
lesdits moyens de génération de journal génèrent des informations de journal indiquant une anomalie dans ledit équipement cible de commande lorsque ledit signal indiquant une anomalie est entrée,
lesdits moyens de mise en relation mettent en relation un temps auquel lesdites informations de journal indiquant une anomalie sont générées avec lesdites informations de journal indiquant une anomalie en vue d'un stockage dans lesdits moyens de stockage de journal, et
lesdits premiers moyens de commande d'affichage conduisent le symbole à être affiché dans ladite première zone d'affichage en établissant une différence entre une forme de sortie des données de symbole pour l'affichage du symbole correspondant auxdites informations de journal indiquant une anomalie et une forme de sortie des données de symbole pour l'affichage du symbole correspondant à un état normal dans ledit équipement cible de commande, de telle sorte qu'un premier mode d'affichage, dans lesdits moyens d'affichage, du symbole correspondant auxdites informations de journal indiquant une anomalie diffère d'un second mode d'affichage, dans lesdits moyens d'affichage, du symbole correspondant audit état normal.

5. Appareil d'affichage selon la revendication 4, dans lequel
lesdits moyens de détection détectent la désignation du symbole affiché selon ledit premier mode d'affichage,
ledit appareil d'affichage comprenant en outre :
des moyens de lecture (132) pour lire un temps correspondant auxdites informations de journal indiquant une anomalie dans lesdits moyens de stockage de journal sur la base de la détection de ladite désignation ; et
des moyens de reproduction (132) pour lire des données vidéo correspondant à une période de temps prédéterminée à compter dudit temps lu, dans lequel
lesdits seconds moyens de commande d'affichage conduisent une image animée à être affichée dans ladite seconde zone d'affichage sur la base des données vidéo lues par lesdits moyens de reproduction.

6. Appareil d'affichage selon la revendication 4, dans lequel
lesdits moyens de détection détectent la désignation du symbole affiché selon ledit premier mode d'affichage,
ledit appareil d'affichage comprenant en outre :
des moyens de lecture (132) pour lire un temps correspondant auxdites informations de journal indiquant une anomalie dans lesdits moyens de stockage de journal sur la base de la détection de ladite désignation ; et
des moyens de reproduction (132) pour lire des données vidéo correspondant à une période de temps allant d'un temps prédéterminé préalable audit temps jusqu'à un temps prédéterminé suivant ledit temps, dans lequel
lesdits seconds moyens de commande d'affichage conduisent une image animée à être affichée dans ladite seconde zone d'affichage sur la base des données vidéo lues par lesdits moyens de reproduction.

7. Appareil d'affichage selon la revendication 4, dans lequel
lesdits premiers moyens de commande d'affichage commandent lesdits moyens d'affichage de telle sorte qu'une multiplicité de symboles soient affichés dans ladite première zone d'affichage selon ledit premier mode d'affichage,
lesdits moyens de détection détectent la désignation de tout symbole parmi ladite multiplicité de symboles, et
lesdits seconds moyens de commande d'affichage comprennent
des moyens de lecture de données de temps pour lire chaque temps correspondant à chaque symbole de ladite multiplicité de symboles dans lesdits moyens de stockage de journal,
des moyens de lecture de données vidéo pour lire des données vidéo correspondant à une période de temps prédéterminée à compter de chaque temps lu pour chaque symbole de ladite multiplicité de symboles dans lesdits moyens de stockage de journal, et
des moyens de commande de reproduction pour conduire une image animée à être affichée dans ladite seconde zone d'affichage dans l'ordre du temps ou dans l'ordre inverse du temps à partir dudit temps correspondant à tout symbole dont ladite désignation est détectée sur la base desdites données vidéo lues.

8. Appareil d'affichage selon l'une quelconque des revendications 5 à 7, dans lequel lesdits moyens d'affichage affichent ladite première zone d'affichage et ladite seconde zone d'affichage sur le même écran.

9. Appareil d'affichage selon la revendication 1, dans lequel
lesdits moyens d'entrée de signal vidéo reçoivent une entrée de chaque donnée vidéo générée sur la base d'une image dudit équipement cible de commande saisie par chacun des moyens d'une multiplicité de moyens de saisie d'image,
lesdits moyens de mise en relation mettent en relation chaque donnée de symbole correspondant à chaque instruction d'une multiplicité d'instructions exécutées par lesdits moyens de commande avec chacune desdites données vidéo, et
lesdits seconds moyens de commande d'affichage conduisent chaque image animée à être affichée dans ladite seconde zone d'affichage sur la base de chacune des données vidéo.

10. Produit-programme conduisant un ordinateur à fonctionner à la manière d'un appareil d'affichage, ledit produit-programme conduisant ledit ordinateur à exécuter les étapes suivantes :
lecture d'un programme de commande comportant une multiplicité d'instructions et de données de symbole pour afficher un symbole associé à chaque instruction de ladite multiplicité d'instructions dans des moyens de stockage servant à stocker des données ;
commande d'un équipement cible de commande relié électriquement audit ordinateur par exécution de chaque instruction de ladite multiplicité d'instructions ;
sur la base des données de symbole correspondant à l'instruction exécutée à ladite étape de commande, étape consistant à conduire le symbole correspondant à ladite instruction exécutée à être affiché dans une première zone d'affichage de moyens d'affichage servant à afficher une image ;
réception d'une entrée de données vidéo générées sur la base d'une image saisie dudit équipement cible de commande ;
mise en relation des données de symbole correspondant à ladite instruction exécutée avec lesdites données vidéo (S608) ;
stockage desdites données vidéo dans lesdits moyens de stockage (S610) ;
détection de la désignation du symbole affiché dans lesdits premiers moyens d'affichage (S802) ; et
en réponse à la détection de ladite désignation, étape consistant à conduire une image animée à être affichée dans une seconde zone d'affichage desdits moyens d'affichage sur la base des données vidéo associées aux données de symbole correspondant au symbole affiché dans ladite première zone d'affichage.

11. Support d'enregistrement stockant le produit-programme selon la revendication 10.
